# EUROPÄISCHE PATENTSCHRIFT

(11) **EP 2 806 962 B1**
(45) Veröffentlichungstag und Bekanntmachung des Hinweises auf die Patenterteilung: **30.03.2016**
(21) Anmeldenummer: 12703731.5
(22) Anmeldetag: 26.01.2012
(51) Int. Cl.: B01D 46/00, B32B 37/12, F01N 3/022, B01D 39/08

(54) **FILTERELEMENT UND VERFAHREN ZUR HERSTELLUNG EINES FILTERELEMENTS**
FILTER ELEMENT AND METHOD FOR PRODUCING A FILTER ELEMENT
ÉLÉMENT FILTRANT ET PROCÉDÉ DE FABRICATION D'UN ÉLÉMENT FILTRANT

(43) Veröffentlichungstag der Anmeldung: 03.12.2014
(73) Patentinhaber: MANN + HUMMEL GMBH, 71638 Ludwigsburg (DE)
(72) Erfinder: MAJER, Tanja, 74379 Ingersheim (DE); VILSMAIER, Gerhard, 84339 Unterdietfurt (DE)
(86) Internationale Anmeldenummer: PCT/EP2012/051254
(87) Internationale Veröffentlichungsnummer: WO 2013/110335

(56) Entgegenhaltungen:
- WO-A1-2012/013647
- WO-A2-99/35189
- DE-B- 1 299 230

## Beschreibung

### Technisches Gebiet

Die Erfindung betrifft ein Filterelement, insbesondere zur Filtration von Fluiden von Brennkraftmaschinen, z. B. Ansaugluft, Schmieröl, Kraftstoff oder Harnstoff-WasserLösung, ein Verfahren zu dessen Herstellung und die Verwendung eines Schmelzklebstoffs zum Verkleben von Filterelementen.

### Stand der Technik

Aus der DE 1299230 ist ein Filter bekannt, dessen Falten mittels einzelner Schmelzklebstoffpunkte verbunden sind.
Bei derartigen Filterelementen besteht das Problem, dass sich bei der Applikation der Schmelzklebstoffe, insbesondere bei einem spurförmigem Auftrag mit länglichen Schmelzklebstoffspuren öder bei punktförmigem Auftrag, z. B. mittels Auftragsdüsen, Auftragsrollen usw., zwischen dem Auftragsequipment und den Enden der Schmelzklebstoffspuren Schmelzklebstofffäden ausbilden, die schnell erkalten und aushärten und im Auftragsbereich am Filter verbleiben. Das Problem tritt besonders häufig beim Schließen von Auftragsdüsen auf. Dies kann insbesondere bei einer Verklebung auf der Reinseite der Filterelemente nachteilig sein, da sich im Betrieb Stücke von erkalteten Schmelzklebstofffäden ablösen und vom Fluidstrom mitgerissen werden können. Dies kann insbesondere bei der Filtration von Ansaugluft von Brennkraftmaschinen von Nachteil sein.

Zum Verkleben von zickzackförmig gefalteten Filterelementen werden regelmäßig Schmelzklebstoffe verwendet. Nicht reaktive Schmelzklebstoffe sind Produkte, die lösungsmittelfrei und bei Raumtemperatur mehr oder weniger feste sind und im heißen Zustand auf eine Klebefläche aufgetragen werden und beim Abkühlen die Klebeverbindung herstellen. Diese Gruppe von Klebstoffen ist auch als Hotmelt bekannt und basiert auf verschiedenen chemischen Rohstoffen. DIN EN 923 definiert Schmelzklebstoff als eine thermisch aufschmelzbares Klebesystem, das nach der Abkühlung Kohäsion entwickelt. Schmelzpunkte liegen meist zwischen 80°C und 250°C. Aus dem Stand der Technik sind verschiedene nicht reaktive Schmelzklebstoffe auf Basis von Polyestern oder Polyamiden bekannt, zum Beispiel Macromelt 2030, 6208 von Henkel, WEVO T570, P 165 von WEVO Chemie oder TH 207, TH 111 von Bostik. Aus Müller und Rath: Formulierung von Kleb- und Dichtstoffen. Hannover: Vincentz Network, 2004 sind weitere Schmelzklebstoffe bekannt. Beim Auftrag der Schmelzklebstoffe entstehen regelmäßig, insbesondere bei der Unterbrechung des Auftrags mittels Auftragsdüsen, Klebstofffäden, die sich zwischen dem aufgetragenen Klebstoff und einer Auftragsdüse bilden und gegebenenfalls abreißen (Fadenzug).

Der Erfindung liegt die Aufgabe zugrunde, ein mittels Schmelzklebstoff verklebtes Filterelement mit einer geringeren Menge an Schmelzklebstofffäden und ein Verfahren zu dessen Herstellung bereitzustellen.

Das nachveröffentlichte Dokument WO2012013647 beschreibt ein Filterelement mit einem Filterkörper der mittels eines Schmelzklebstoffsystems verklebt ist. Eine verwendete Schmelzklebstoffmischung besteht aus 15-85 Gew % Polyester sowie 15-85 Gew % Polyamid, wobei diese Mischung einen Gesamtanteil von mehr als 75 Gew % des gesamten Schmelzklebstoffsystems hat.

### Offenbarung der Erfindung

Die Aufgabe wird gelöst durch ein Filterelement nach Anspruch 1 insbesondere zur Filtration von Gasen und Flüssigkeiten, insbesondere für die Filtration von Ansaugluft, Kraftstoff, Öl oder Harnstoff-Wasser-Lösung von Brennkraftmaschinen oder zur Filtration von Bearbeitungsflüssigkeiten von Metallbearbeitungsmaschinen, insbesondere Erodiermaschinen, umfassend einen Filterkörper aus mindestens einer Lages eines flachen, bahnförmigen Filtermediums, welches eine Rohseite von einer Reinseite trennt, z. B. einen zickzackförmig gefalteten, aus einem flachen Filtermedium gebildeten Filterbalg. Der Filterbalg kann als rechteckförmiger, zickzackförmiger Filterbalg oder als ringförmig angeordneter, sternförmig gefalteter Filterbalg ausgebildet sein. Alternativ kann als Filterkörper ein insbesondere wechselseitig verschlossene Kanäle ausbildendes Filtermedium verwendet werden, wobei der Filterkörper durch Aufwickeln oder schichtweises Aufeinanderlegen und Aneinanderkleben eines zwei Filtermedienlagen umfassenden Halbzeugs gebildet ist, welches eine Glattlage und eine darauf angeordnete Welllage umfasst.
Das Filterelement ist erfindungsgemäß mittels eines Schmelzklebstoffsystems verklebt. Erfindungsgemäß umfasst das Schmelzklebstoffsystem eine Schmelzklebstoffmischung, die Schmelzklebstoffmischung umfassend 15-85 Gewichts-%, insbesondere 30-70 Gewichts-% eines ersten Schmelzklebstoffes, der Polyester basiert ist, und 15-85 Gewichts-%, insbesondere 30-70 Gewichts-% eines zweiten Schmelzklebstoffes, der Polyamid basiert ist, gelöst. Erfindungsgemäß ergeben die Gewichtsanteile des ersten und des zweiten Schmelzklebstoffes vorzugsweise zusammen 100 Gewichts-% der Schmelzklebstoffmischung.

Dabei hat die Schmelzklebstoffmischung einen Anteil von 75-100 Gewichts-% (vorzugsweise nahezu oder genau 100 Gewichts-%) an dem Schmelzklebstoffsystem, wobei der Rest aus Füllstoffen wie Kreide und/oder Pigmenten wie Titandioxid als Weißpigment und/oder einem klebrig machenden Harz und/oder mindestens einem weiteren Schmelzklebstoff auf Polykondensat-Basis gebildet ist.

Als Filtermedien können beispielsweise Zellulosemedien, Medien aus schmelzgeblasenen Fasern, Faservliese oder in Schichten aufgebaute Kombinationen daraus zum Einsatz kommen.

Es wurde überraschend festgestellt, dass bei Verwendung des genannten Schmelzklebstoffsystems ein mittels Schmelzklebstoffspuren verklebtes Filterelement hergestellt werden kann, welches im Vergleich zu anderen derartigen Filterelementen eine deutlich geringere Anzahl von Schmelzklebstofffäden aufweist.

In einer Ausführungsform ist das Filterelement mit mindestens einer Klebstoffspur verklebt. Die Klebstoffspur(en) können ununterbrochen oder unterbrochen, insbesondere regelmäßig oder unregelmäßig unterbrochen sein. Die Klebstoffspuren verlaufen insbesondere senkrecht zu den Faltkanten auf dem Filtermedium, können jedoch auch in einem Winkel zu den Faltkanten angeordnet sein. Analog ist bei dem durch Glatt- und Welllage gebildeten Filterelement zwischen Glatt- und Welllage des Halbzeugs und/oder zwischen den beim Aufwickeln in Kontakt kommenden Glatt- und Welllage mindestens eine insbesondere mindestens zwei, insbesondere regelmäßig oder unregelmäßig unterbrochene Klebstoffspuren aus einem Schmelzklebstoffsystem angeordnet.

Erfindungsgemäß weist der Filterkörper auf mindestens einer Fläche des flachen, bahnförmigen Filtermediums eine dichtende, ununterbrochene Klebstoffspur aus dem Schmelzklebstoffsystem auf, die den Filterkörper derart verklebt, dass Roh- und Reinseite des Filterelements dichtend voneinander getrennt sind.

In einer Ausführungsform ist der Filterkörper ringförmig und aus einem zickzackförmig gefalteten Filterbalg aus einem flachen Filtermediumbogen gebildet, der ringförmig derart fluiddicht geschlossen ist, dass zwei gegenüberliegende Endabschnitte des Filtermediumbogens, insbesondere parallel zu den Faltkanten, durch eine Klebstoffspur aus dem Schmelzklebstoffsystem, die entlang der Endkanten an den Endabschnitten verläuft, dichtend verbunden sind.

In einer Ausführungsform verläuft die Klebstoffspur zwischen den Endkanten und den Faltkanten, welche den beiden Endkanten nächstliegend sind.

In einer Ausführungsform verläuft die Klebstoffspur mittig zwischen den Endkanten und den Faltkanten, welche den beiden Endkanten nächstliegend sind.

In einer Ausführungsform sind die Endabschnitte an der Klebstoffspur, insbesondere mit einem wellenförmigen Profil, verpresst. Dadurch wird eine besonders dichte und beständige Verbindung erreicht.

In einer Ausführungsform verläuft die Klebstoffspur entlang der gesamten Länge der Endkanten.

In einer Ausführungsform sind an den axialen Stirnseiten des ringförmigen Filterkörpers Endscheiben angeordnet, die die Stirnseiten dichtend so verschließen, dass die Rohseite von der Reinseite gentrennt wird, wobei die Klebstoffspur dichtend mit den Endscheiben verbunden ist. Diese können als Kunststoff-Spritzgussteile ausgebildet und mit dem Filterbalg verschweißt oder mittels Klebstoff verklebt sein. Ferner sind Endscheiben denkbar, die aus einem unter Wärmeeinwirkung aufquellenden und aushärtenden Material gebildet sind, welche sich beim unter Einsatz von Wärme beim Aufquellen mit dem Filterbalg unlösbar verbinden.

In einer Ausführungsform wird gemäß einem insbesondere erfindungsgemäßen Verfahren das zickzackförmige Filtermaterial zu einem Balg geformt, indem Endabschnitte oder Endfaltenabschnitte durch die Klebstoffspur (Dichtspur) miteinander verbunden sind. Durch die zickzackförmige Faltung ergibt sich eine größere Oberfläche des Filtermaterials in dem Filterbalg.

In einer Ausführungsform eines Filterbalg für ein Filterelement werden die beiden Endfaltenabschnitte durch die Dichtspur miteinander verbunden und abgedichtet. Aus dem Innenraum des Faltenbalgs kann durch die miteinander verbundenen Endabschnitte kein Fluid entweichen. Die miteinander verbundenen Endabschnitte werden insbesondere erfindungsgemäß verpresst, während die Dichtspur aus Schmelzklebstoff noch flüssig ist, bevorzugt bis der Schmelzklebstoff aushärtet. Das Verpressen erfolgt vorzugsweise mittels profilierter Profile oder Zangen, welche eine parallel zu den Endfaltenabschnitten verlaufende, wellenförmige oder gezackte Profilierung aufweisen. Dadurch entstehen entsprechend verformte Endabschnitte und es wird eine beständigere Verbindung erzeugt. Der zickzackförmige Filtermaterialbogen wird bevorzugt derart umgebogen, dass die beiden Endfaltenabschnitte flächig aufeinanderliegen. Dabei bilden die Endkanten bevorzugt eine gemeinsame Abschlusskante.

Das erfindungsgemäße Filterelement ist beispielsweise als Öl- oder Kraftstofffilter umfassend ein wie hier beschriebenes Filterelement ausgeführt. Der aus zickzackförmigem Filtermaterial gebildete Faltenbalg ist zwischen zwei Deckeln gehalten. Beim Faltenbalg sind zwei Endabschnitte durch die Dichtspur miteinander fluiddicht verbunden.

Der obere Deckel ist bevorzugt mit einem Anschluss versehen, der eine Öffnung aufweist. Zu filterndes Fluid kann durch die Falten des Filtermaterials strömen und das Filterelement durch die Öffnung verlassen. Alternativ ist eine Durchströmung in entgegengesetzter Richtung denkbar. Selbstverständlich sind weitere Filtereinrichtungen denkbar. Beispielweise kann das Filterelement in einen Filtertopf eingeführt oder auch ein eckiger Balg gebildet werden. Man spricht bei den Deckeln auch von Endscheiben. Es sind auch gegossene Deckel aus geschäumtem Polyurethan denkbar. Die Dichtspur steht vorteilhaft jeweils in dichter Verbindung mit den Deckeln so dass eine zuverlässige Dichtung zwischen Roh- und Reinseite erfolgt. Im Falle eines angeschweißten Deckels, eines Polyurethandeckels oder einem Deckel aus einem unter Wärmeeinwirkung aufquellenden und aushärtenden Material sind die Enden der Dichtspur in den Deckel eingebettet, im Falle eines mit dem Filterbalg verklebten Deckels sind die Enden der Dichtspur in die Klebstoffschicht zwischen Deckel und Filterbalg eingebettet oder mit dieser verbunden.

Im Folgenden werden vorteilhafte Merkmale eines insbesondere erfindungsgemäß hergestellten Filterelementes nach einem erfindungsgemäßen Verfahren dargestellt: In einem ersten Schritt wird ein flächiger Filtermaterialbogen bereitgestellt. Der Filtermaterialbogen ist beispielsweise rechteckig geformt. Es sollen die gegenüberliegenden Endabschnitte miteinander verbunden werden, damit ein rohrförmiger Filterelementkörper ausgebildet wird. Dabei werden in der Folge insbesondere die Endkanten aneinandergelegt. Um einen zickzackförmigen Faltenbalg auszubilden, wird der Filtermaterialbogen zunächst plissiert bzw. gefaltet. Es sind verschiedene Verfahren zum zickzackförmigen Falten von Filtermaterialien bekannt. Es können z. B. gegeneinander greifende Faltmesser eingesetzt werden, die Faltungen unterschiedlicher Orientierung in dem Filterbogen hervorrufen. Auch rotierende Messeranordnungen sind bekannt. Die Endabschnitte des Filtermaterialbogens entsprechen nach dem Falten Endfaltenabschnitten.

In einer alternativen Ausführungsform des Filterkörpers ist dieser aus einem Halbzeug aus zwei aufeinanderliegenden Lagen eines Filtermediums gebildet, wobei die eine Lage als Flachlage und die zweite Lage als gewellte Lage ausgebildet ist. Das Halbzeug wird gewickelt oder schichtweise aufeinander gestapelt, wodurch zwischen den Lagen durchströmbare Kanäle ausbildet werden, wobei die zwei Lagen jeweils durch mindestens eine ununterbrochene Klebstoffspur (Dichtspur) aus dem Schmelzklebstoffsystem miteinander verbunden sind. Die Klebstoffspur verläuft auf einer flächigen Seite der Glattlage entlang einer ersten Kante der Glattlage und entlang einer Kante der Welllage zwischen der Glattlage und der Welllage senkrecht derart zu den Wellen, dass die durchströmbaren Kanäle an einem ersten Ende dichtend verschlossen sind.

In einer Ausführungsform ist eine zweite, ununterbrochene Klebstoffspur aus dem Schmelzklebstoffsystem vorgesehen, durch welche die zwei Lagen miteinander verbunden sind, wobei die zweite Klebstoffspur (Dichtspur) auf der zweiten, der ersten flächigen Seite gegenüberliegenden Seite der Glattlage entlang einer zweiten, der ersten Kante der Glattlage gegenüberliegenden Kante zwischen der Glattlage und der Welllage senkrecht derart zu den Wellen verläuft, dass die durchströmbaren Kanäle an einem zweiten Ende dichtend verschlossen sind. Dadurch wird ein Filterkörper mit wechselseitig verschlossenen Kanälen gebildet.

In einer Ausführungsform ist der Filterkörper aus einem Halbzeug aus zwei aufeinanderliegenden, gewickelten Lagen eines Filtermediums gebildet, wobei die eine Lage als Flachlage und die zweite Lage als gewellte Lage ausgebildet ist, wodurch zwischen den zwei Lagen durchströmbare Kanäle ausbildet werden, wobei die zwei Lagen durch mindestens eine Klebstoffspur aus dem Schmelzklebstoffsystem miteinander verbunden sind. Die Klebstoffspur (Haftspur) verläuft dabei auf einer den Wellenbergen zugewandten Seite der Glattlage quer, insbesondere senkrecht derart zu den Wellen, dass die an der Glattlage anliegenden Wellenberge mit der Glattlage verklebt sind, wobei die Höhe der Klebstoffspur geringer ist als die Höhe der Wellen, so dass die durchströmbaren Kanäle durch diese Klebstoffspur nicht verschlossen sind. Auch ein Auftrag auf die Wellenberge ist denkbar.

In einer vorteilhaften Ausführungsform umfasst der Filterkörper sowohl mindestens eine der genannten Haftspuren sowie zwei der genannten Dichtspuren, durch welche ein Filterkörper mit wechselseitig verschlossenen Kanälen gebildet wird. Die Dichtspuren bilden insbesondere Verschlussstopfen für die Kanäle.

In einer anderen Ausführungsform ist der Filterkörper aus einem zickzackförmig gefalteten Filterbalg aus einem flachen Filtermediumbogen gebildet, wobei entlang der senkrecht zu den Faltkanten verlaufenden Stirnkanten des Filtemediumbogens jeweils eine ununterbrochene Klebstoffspur aus dem Schmelzklebstoffsystem vorgesehen ist, welche die aufgestellten Falten derart unter Bildung einer Faltentasche seitlich verschließt, dass Roh- und Reinseite des Filterelements dichtend voneinander getrennt sind.

In einer Ausführungsform bilden die Faltkanten auf mindestens einer Seite des Filterbalges eine Ebene, so dass ein einseitig oder beidseitig flaches Filterelement gebildet ist.

In einer Ausführungsform ist eine durch die Faltkanten gebildete Ebene durch eine insbesondere gegossene Dichtung umschlossen, die um die Ebene herumläuft, insbesondere aus einem geschäumten Polymer, insbesondere Polyurethan, zur dichtenden Trennung der Rohseite von der Reinseite in einem Filtergehäuse.

In einer Ausführungsform ist der Filterkörper aus einem zickzackförmig gefalteten Filterbalg aus einem flachen Filtermediumbogen gebildet, wobei der Filterbalg eine Klebstoffspur aufweist, welche in einer durch die Faltkanten gebildeten Ebene des Filterbalges auf diesen ununterbrochen über mehrere Faltkanten hinweg, insbesondere senkrecht zu den Faltkanten, aufgebracht ist, insbesondere um den Filterbalg zu stabilisieren und den Abstand zwischen den benachbarten Faltkanten im Betrieb konstant zu halten.

In einer Ausführungsform ist der Filterkörper aus einem zickzackförmig gefalteten Filterbalg aus einem flachen Filtermediumbogen mit anströmseitigen Faltkanten und abströmseitigen Faltkanten gebildet und umfasst eine Vorabscheiderschicht, insbesondere aus einem Vlies, welche auf der durch die anströmseitigen Faltkanten gebildeten Fläche aufliegt, wobei der Filterkörper mittels des Schmelzklebstoffsystems mit der Vorabscheiderschicht verklebt ist.

In einer Ausführungsform ist die Verklebung mit der Vorabscheiderschicht durch Klebstoffpunkte oder Klebstoffspuren, insbesondere durch mindestens zwei Klebstoffspuren realisiert.

In einer Ausführungsform ist der Filterkörper aus einem zickzackförmig gefalteten Filterbalg aus einem flachen Filtermediumbogen gebildet, wobei die zickzackförmig verlaufenden Stirnkanten des Filtermediumbogens zwei Stirnflächen aufspannen, wobei auf mindestens einer der Stirnflächen ein Seitenband aus einem Gewebe oder einem Vlies aufgebracht ist, welches mittels einer breiten, flächigen Klebstoffspur aus dem Schmelzklebstoffsystem verklebt ist.

In einer Ausführungsform ist das Seitenband mittels der breiten, flächigen Klebstoffspur mit der durch Stirnseite derart dichtend verklebt, dass die Rohseite von der Reinseite getrennt ist.

In einer Ausführungsform weist das Seitenband zwei Abschnitte auf, die sich überlappen, wobei die zwei Abschnitte in dem Bereich, in dem sie sich überlappen, mit einer Klebstoffspur aus dem Schmelzklebstoffsystem verklebt sind.

In einer Ausführungsform ist die Klebstoffspur eine breite, flächige Klebstoffspur und vorzugsweise mittels einer Breitschlitzdüse aufgetragen.

In einer Ausführungsform umfasst das Filterelement ein zickzackförmig gefaltetes Filtermedium, welches eine Rohseite von einer Reinseite trennt und abwechselnd Faltenspitzen und Faltengründe aufweist, wobei in den Faltenzwischenräumen insbesondere längliche Stabilisierungsspuren aus dem Schmelzklebstoffsystem angeordnet sind, welche sich alternierend zwischen Faltenspitzen und Faltengründen erstrecken, wobei auf der Rohseite und bevorzugt insbesondere auch auf der Reinseite des Filtermediums jeweils mindestens zwei Klebstoffspuren zueinander parallel und senkrecht zu der Richtung der Faltkanten auf dem Filterelement angeordnet sind, wobei die Klebstoffspuren auf der Rohseite und/oder der Reinseite in regelmäßigen Abständen unterbrochen sind.

Dabei sind die Anfangs- und Endpunkte der Unterbrechungen der Klebstoffspuren bevorzugt an einer Mehrzahl von Geraden ausgerichtet.

Als länglich werden Stabilisierungsspuren bezeichnet, deren Länge in Auftragsrichtung 5-mal länger, bevorzugt 10-mal länger als deren Breite ist.

In einer Ausführungsform umfassen die Stabilisierungsspuren insbesondere regelmäßig beabstandete punktförmig aufgetragene Schmelzklebstoffpunkte auf.

In einer Ausführungsform umfassen die Stabilisierungsspuren längliche, durchgehend aufgetragene Abschnitte, die insbesondere regelmäßig von Durchbrechungen unterbrochen sein können.

In einer Ausführungsform sind die Anfangs- und Endpunkte der Unterbrechungen der Stabilisierungsspuren an einer Mehrzahl von Geraden ausgerichtet, welche zueinander parallel verlaufen und mit den Faltkanten einen Winkel von 10-80°, bevorzugt 45 +/-15° bilden.

In einer Ausführungsform weisen die Stabilisierungsspuren reinseitig und/oder rohseitig eine Unterbrechung der Klebstoffspur auf, welche die reinseitige bzw. rohseitige Faltenspitze umgibt.

In einer Ausführungsform weisen die Stabilisierungsspuren reinseitig und/oder rohseitig eine Unterbrechung der Klebstoffspur auf, welche den reinseitigen bzw. rohseitigen Faltengrund umgibt.

In einer Ausführungsform liegen mindestens eine, bevorzugt alle Stabilisierungsspuren, auf der Rohseite einer/den Klebstoffspur(en) auf der Reinseite direkt gegenüber.
In einer Ausführungsform überschneiden sich die Unterbrechungen der sich gegenüberliegenden Stabilisierungsspuren auf der Rohseite und der Reinseite nicht.

In einer Ausführungsform verlaufen die Anfangs- und Endpunkte der Unterbrechungen der Stabilisierungsspuren an mindestens zwei Geradenscharen, wobei jede Geradenschar zueinander parallele Geraden umfasst, wobei sich die korrespondierenden Geraden auf dem Filtermedium schneiden, wodurch ein pfeilförmiger oder zickzackförmiger Verlauf der Unterbrechungen der Stabilisierungsspur auf dem Filtermedium gebildet wird.

In einer Ausführungsform werden die Anfangs- und Endpunkte der Unterbrechungen der Stabilisierungsspuren anstatt durch Geradenscharen durch Kurvenscharen definiert, wobei die Kurven insbesondere dieselbe Form haben, jedoch in einer Richtung senkrecht (+/- 30°) zu den Faltkanten zueinander verschoben sind.

In einer Ausführungsform umfasst die Kurvenschar Kreis- oder Ellipsenabschnitte, Sinusformen oder sonstige regelmäßige Schwingungsformen.

In einer Ausführungsform ist der Abstand zwischen zwei aufeinanderfolgenden Unterbrechungen, d.h. die Länge eines durchgehenden Stabilisierungsspuren länger als mindestens eine, bevorzugt beide an den durchgehenden Klebstoffspurabschnitt anschließenden Unterbrechungen.

In einer Ausführungsform beträgt die Länge mindestens einer Unterbrechung, insbesondere von zwischen Faltenspitze und Faltengrund liegenden Unterbrechungen 5-20 mm, bevorzugt 20-40 mm, alternativ 40-60 mm.

In einer Ausführungsform beträgt die Länge durchgehender Abschnitte der Stabilisierungsspuren mindestens 5-20 mm, bevorzugt 20-40 mm, alternativ größer 40 mm.

Vorteilhaft sind die Maße der Unterbrechungen und der durchgehenden Abschnitte der Stabilisierungsspuren so gewählt, dass eine ausreichende Stabilität des Filtermediums erreicht und vorteilhaft gleichzeitig eine Kommunikation zwischen den durch die Klebstoffspuren getrennten Faltenabschnitten ermöglicht wird.

In einer Ausführungsform umfasst das Filterelement einen zickzackförmig gefalteten Filterbalg, der zwei senkrecht zu den Faltkanten angeordnete Stirnseiten hat, die mittels verklebter oder verschweißter Endscheiben, einer Vergussmasse (insbesondere geschäumtes Polyurethan) oder einer durchgehenden, entlang der zickzackförmig verlaufenden Stirnkanten an den Stirnseiten des Filterbalgs verlaufenden Schmelzklebstoffspur aus dem Schmelzklebstoffsystem dichtend verschlossen sind, wobei das Filterelement im Bereich zwischen den Stirnseiten durch mindestens eine, insbesondere mindestens zwei, insbesondere regelmäßig oder unregelmäßig unterbrochene Klebstoffspuren aus einem Stabilisierungsspuren verklebt ist.

Das Filterelement ist in einer Ausführungsform als ringförmiges Filterelement mit ringförmigen Endscheiben ausgebildet, wobei eine der Endscheiben bevorzugt geschlossen ausgeführt ist und die zweite Endscheibe eine innere Fluidströmungsöffnung aufweist, um welche eine axiale oder radiale Dichtung zur Abdichtung gegenüber einem Gehäusefluidkanal, insbesondere dem Auslasskanal bei einer Durchströmung von radial außen nach innen, angeordnet ist.

In einer anderen Ausführungsform weist das Filterelement eine rechteckige Form mit einer rohseitigen Anströmseite und einer reinseitigen Abströmseite auf. Das Filterelement wird durch ein mehrfach gefaltetes Filtermedium gebildet, wobei sich die Falten zwischen der Anströmseite und der Abströmseite erstrecken, d. h. es befinden sich jeweils Faltenspitzen auf der Anströmseite und der Abströmseite. Die nicht durchströmten Seitenflächen des Filterelements sind von einem Vlies, insbesondere von einem Polyestervlies umgeben, welches auf seiner dem Filterelement zugewandten Seite mit einer insbesondere mit dem erfindungsgemäßen Schmelzklebstoff gebildeten Schmelzklebstoffschicht versehen ist. Diese Schmelzklebstoffschicht stellt eine flächige Verklebung des Polyestervlieses mit dem Filterelement her, wobei auch die Stirnseiten des Filterbalges abgedichtet werden.

In einer Ausführungsform umfass das Filterelement einen Hauptrahmen und einen Hilfsrahmen, wobei der Hauptrahmen eine axiale Dichtung trägt, welche in Richtung der Abströmseite dichtet und in eine Nut des Hauptrahmens oder in eine Nut zwischen Hauptrahmen und Seitenflächen eingebracht ist.

Der Hilfsrahmen ist vorteilhaft in einer Ausführungsform mit den Seitenflächen durch eine Klebeverbindung verbunden und weist radiale Flächen und/oder axiale Flächen zur Abstützung des Filterelements in einem Filtergehäuse auf.

In einer Ausführungsform ist auf den nicht durchströmten Seitenflächen des Filtermediums ein Kunststoffrahmen mittels einer insbesondere mit dem erfindungsgemäßen Schmelzklebstoff gebildeten Schmelzklebstoffverbindung aufgebracht, wobei auf den Stirnseiten durch den Schmelzklebstoff auch die Abdichtung der Stirnseite erfolgt.

Auf den Endseiten und/oder den Stirnseiten sind in einer Ausführungsform Öffnungen in den Kunststoffrahmen eingebracht.

In einer Ausführungsform trägt der Kunststoffrahmen auf der Anströmseite eine axiale Dichtung, welche mit einer Dichtfläche eines Filtergehäuses zur Abdichtung zwischen Rohseite und Reinseite in Verbindung bringbar ist.

In einer Ausführungsform ist ein Griff vorgesehen, welcher mit dem Kunststoffrahmen in Verbindung steht und zur besseren Handhabung des Filterelements dient.

Die Aufgabe wird ferner gelöst durch ein Verfahren zur Herstellung eines erfindungsgemässen Filterelementes, das Verfahren umfassend die Schritte:
a. Aufschmelzen einer Schmelzklebstoffmischung, insbesondere in einem Extruder, die Schmelzklebstoffmischung umfassend
   i. 15-85 Gewichts-% eines ersten Schmelzklebstoffes, der Polyester basiert ist,
   ii. 15-85 Gewichts-% eines zweiten Schmelzklebstoffes, der Polyamid basiert ist,
   wobei die Gewichtsanteile des ersten und des zweiten Schmelzklebstoffes zusammen 100 Gewichts-% der Schmelzklebstoffmischung ergeben,
   wobei die Schmelzklebstoffmischung einen Anteil von mehr als 75 Gewichts-% an dem Schmelzklebstoffsystem hat, wobei der Rest aus Füllstoffen wie Kreide und/oder Pigmenten wie Titandioxid als Weißpigment und/oder einem klebrig machenden Harz und/oder mindestens einem weiteren Schmelzklebstoff auf Polykondensat-Basis gebildet ist,
b. insbesondere dynamisches Mischen der beiden insbesondere in Pulver- oder Granulatform vorliegenden Schmelzklebstoffe, insbesondere unter Erzeugung von Scherkräften in der Schmelze, insbesondere in einem Extruder, zu einer Schmelzklebstoffmischung,
c. Applikation der geschmolzenen Schmelzklebstoffmischung auf ein bahnförmiges Filtermedium in mindestens einer Klebstoffspur, insbesondere mittels einer Auftragsdüse,
d. Aushärten der mindestens einen Klebstoffspur unter Verbindung von Abschnitten einer Filtermediumbahn des Filtermediums mit anderen Abschnitten der selben Filtermediumbahn oder mit Abschnitten einer zweiten, insbesondere gewellten Filtermediumbahn und/oder mit einem Vorabscheidervlies.

Dies hat den Vorteil, dass ein mittels Schmelzklebstoff verklebtes Filterelement hergestellt werden kann, welches im Vergleich zu anderen bekannten mittels Schmelzklebstoff verklebten Filterelementen eine geringere Anzahl von Schmelzklebstofffäden aufweist.

In einer Ausführungsform werden die Schmelzklebstoffe, insbesondere in Pulver- und/oder Granulatform vorliegend, der beiden Schmelzklebstoffe vor dem Erhitzen durchmengt und anschließend erhitzt und aufgeschmolzen.

In einer Ausführungsform beider Verfahren erfolgt das weitere Mischen, Erhitzen und Aufschmelzen der Schmelzklebstoffe in einem Extruder.

Dies hat den Vorteil, dass nahe am Auftragsort eine sehr gute Durchmischung der Schmelzklebstoffe erreicht wird. Die Entmischung im geschmolzenen Zustand wird dadurch reduziert. In einer Ausführungsform is zwischen Extruder und Auftragsdüse eine Pumpe angeordnet.

In einer Ausführungsform wird das aufgeschmolzene Schmelzklebstoffsystem mit einem Gas, insbesondere Stickstoff, Luft, CO2 oder dergleichen aufgeschäumt.

In einer Ausführungsform erfolgt der Auftrag des Klebstoffes direkt anschließend nach der Durchmischung, insbesondere zur Vermeidung des Entmischens.

In einer Ausführungsform des Verfahrens erfolgt abschließend, insbesondere ohne zwischenzeitliches Abkühlen ein spurförmiger, regelmäßig oder unregelmäßig unterbrochener Auftrag auf ein flaches, insbesondere faseriges Substrat.

Dabei ist vorteilhaft, dass der Auftrag nur wenige Minuten (insbesondere 0-5 Minuten) nach dem Mischen erfolgt, um die Entmischung der Komponenten möglichst geringzuhalten.

In einer Ausführungsform erfolgt der Auftrag mittels Auftragsdüsen, die insbesondere jeweils mit einer Zahnradpumpe verbunden sind.

In einer Ausführungsform erfolgt der Auftrag mittels einer Breitschlitzdüse welche sich in einem Stahlrohr mit vielen Bohrungen (Größe und Anzahl abhängig vom gewünschten Kleberpunktbild) befindet, wobei durch das Stahlrohr appliziert wird. Mit der Größe des Rohres und der Größe der Bohrungen wird in Verbindung mit der Fördermenge des Klebstoffes die Punktgröße bzw. die Länge des Schmelzklebstoffauftrags bestimmt.

In einer Ausführungsform dient das Verfahren zur Herstellung eines erfindungsgemäßen Filterkörpers mit wechselseitig verschlossenen Kanälen. Eine Glattlage und eine Welllage eines bahnförmigen Filtermaterials werden zur Bildung eines Halbzeugs aufeinander gelegt. Dabei wird eine ununterbrochene Dichtspur aus flüssigen Schmelzklebstoff, insbesondere wie für die vorliegende Erfindung verwendet, zwischen Glattlage und Welllage auf die Glattlage entlang einer Stirnkante der Glattlage mittels einer Düse aufdosiert. Beim Aufeinanderlegen von Glattlage und Welllage bilden sich anschließend durch die Dichtspur Verschlussstopfen, die die zwischen Glattlage und Welllage gebildeten Kanäle einseitig fluiddicht verschließt. Alternativ kann auch auf die Welllage aufgetragen werden. Fakultativ wird zusätzlich eine flache Haftspur aus Schmelzklebstoff aufgetragen, welche keine Kanäle verschließt, jedoch eine Verklebung zwischen Glattlage und Welllage erzeugt. Das so gebildete Halbzeug wird anschließend entlang der zweiten, der ersten gegenüberliegenden Stirnkante mit einer weiteren Dichtspur versehen und anschließend, insbesondere um einen Kern, aufgewickelt, wobei wiederum Kanäle entstehen, die durch Verschlussstopfen verschlossen sind. Eine Durchströmung der Kanäle entlang der Wickelachse ist damit nur möglich, indem in einen endseitig durch Verschlussstopfen verschlossenen Kanal eintretendes Fluid durch eine Filtermedienlage (Glatt- oder Welllage) in einen anfangsseitig verschlossenen Kanal übertritt, wodurch das Fluid gereinigt wird.

Eine alternative Möglichkeit zur Bildung eines durchströmbaren Filterelements aus dem vorgenannten Halbzeug besteht darin, dass das Halbzeug in mehreren Lagen aufeinander geklebt wird.

Die erfindungsgemäßen Filterelemente sind insbesondere an einer durchströmten Fläche mit einer Dichtung zur Trennung von Roh- und Reinseite in einem Filtergehäuse versehen.

In einer weiteren Ausgestaltung eines Verfahrens zur Herstellung eines erfindungsgemäßen Filterelements wird eine Bahn aus flachem Filtermedium bevorzugt mit Soll-Faltkanten versehen, z. B. durch Verpressen quer zur Bahn- und Vorschubrichtung oder durch Verschweißen entlang der Soll-Faltkanten von ein- oder mehrschichtigen, synthetischen Medien, z. B. Vliese und/oder Gewebe und/oder Netze, z. B. aus thermoplastischen Fasern, insbesondere aus schmelzgeblasene Fasern. Entlang der Stirnkanten der Bahn werden ununterbrochene Schmelzklebstoffspuren (Dichtspuren) insbesondere aus Schmelzklebstoff entsprechend dieser Erfindung aufgebracht. In einem zweiten Schritt werden die Falten aufgestellt, wodurch die Dichtspuren zwischen zwei Faltkanten über die Faltenhöhe in dichtenden Kontakt geraten und die Stirnseiten dichtend verschließen, derart, dass die Rohseite von der Reinseite getrennt wird.

In diesem Zustand, wenn die Falten aufgestellt sind, wird in einer vorteilhaften Ausführungsform auf mindestens eine der Ebenen, welche durch die Faltkanten aufgespannt werden, eine weitere Klebstoffspur (Distanzspur) aufgebracht, welche auf den Faltkanten ununterbrochen über mehrere Faltkanten hinweg, insbesondere senkrecht zu den Faltkanten, aufgebracht ist, insbesondere um den Filterbalg zu stabilisieren und den Abstand zwischen den benachbarten Faltkanten im Betrieb konstant zu halten. Diese Distanzspur verschließt vorzugsweise die Falten nicht in gleicher Weise wie die Dichtspuren, sondern verläuft im Wesentlichen (Wellenbildung ist unumgänglich) in der durch die Faltkanten aufgespannten Ebene. Diese Distanzspur kann zusätzlich als Befestigungsmittel für eine Vorabscheidestufe, insbesondere ein eben auf der Anströmseite angeordnetes, ebenes Vorabscheidevlies verwendet werden, wenn dieses aufgelegt wird, solange die Distanzspur noch flüssig ist oder zumindest noch Haftverbindungen erzeugen kann. Zusätzlich oder alternativ können parallel in der gleichen Ebene weitere Klebstoffspuren (Vorvliesbefestigungsspuren) aufgebracht werden, insbesondere entlang und im Bereich der Stirnseiten, z. B. in einem Abstand nicht weiter als 10 cm, vorzugsweise 5 cm von den Dichtspuren zur Mitte hin, zur Anbindung des anschließend aufzulegenden Vorabscheidervlieses.

In einer Ausführungsform eines erfindungsgemäß hergestellten Filterelements mit einem Vorabscheidervlies ist die Rohseite von einer Dichtung vollständig umgeben, welche zum dichtenden Einbau in ein Filtergehäuse dient.

In einer weiteren Ausgestaltung eines Verfahrens zur Herstellung eines erfindungsgemäßen Filterelements wird insbesondere ein Seitenband aus zwei Abschnitten, welche mittels einer vorzugsweise mittels Breitschlitzdüse aufgebrachten, breiten Klebstoffspur, vorzugsweise aus dem gemäß dieser Erfindung verwendeten Schmelzklebstoffsystem, mit dem insbesondere ebenen Filterbalg verbunden. Die Klebstoffspur ist im Bereich der Überlappung der Abschnitte insbesondere ununterbrochen. Die Verwendung dieses Schmelzklebstoffs hat den Vorteil, dass beim Schließen der Auftragsdüsen deutlich weniger Schmelzklebstofffäden entstehen.

In einer Ausgestaltung werden zwei Seitenbänder seitlich, senkrecht zu den Faltkanten verwendet, um ein abgeschlossenes Filterelement aus einer gefalteten Filtermedienbahn zu bilden. Die Seitenbänder sind insbesondere aus Textil, Kunststoffgewebe, Kunststoffgitter, insbesondere Streckgitter, oder aus Vlies, insbesondere aus thermoplastischen Fasern, insbesondere schmelzgeblasene Fasern. Auf die Seitenbänder ist jeweils eine flache, im Wesentlichen mindestens die Faltenhöhe überspannende, ununterbrochene Schmelzklebstoffspur (Dichtspur) aus dem gemäß dieser Erfindung verwendeten Schmelzklebstoff aufgebracht, insbesondere mittels einer Breitschlitzdüse. Die Breite der Schmelzklebstoffspur ist maximal so breit wie das Seitenband und überragt dessen Kanten nicht. Das Seitenband wird mit dem noch flüssigen Schmelklebstoff gegen die durch die Stirnkanten der Bahn aus Filtermedium gepresst wobei die Dichtspur die aufgestellten Falten derart unter Bildung einer Faltentasche seitlich verschließt, dass Roh- und Reinseite des Filterelements dichtend voneinander getrennt sind. Dabei können Seitenflächen des Seitenbandes als Dichtflächen in einem Filtergehäuse, insbesondere von einen Innenraumluftfiltersystem, insbesondere für die Filtration von Innenraumluft von Straßenfahrzeugen, Land- und Baumaschinen, dienen. Zusätzlich kann auf ähnliche Weise ein weiteres, dichtendes Seitenband quer zu den ersten Seitenbändern entlang der Faltkanten vorgesehen sein, ebenfalls mit einer im Wesentlichen mindestens die Faltenhöhe überspannenden, ununterbrochenen Schmelzklebstoffspur (Dichtspur) aus dem gemäß dieser Erfindung verwendeten Schmelzklebstoff am Ende der Bahn befestigt.

Die Erfindung betrifft ferner die Verwendung eines Schmelzklebstoffsystems zum fadenzugfreien Verkleben von erfindungsgemässen Filterelementen nach Anspruch 1.

In einer Ausführungsform erfolgt die Verklebung des Filterelements mit einem Schmelzklebstoffsystem, das Schmelzklebstoffsystem umfassend eine Schmelzklebstoffmischung, die Mischung umfassend 15-85 Gewichts-%, insbesondere 30-70 Gewichts-% eines ersten Schmelzklebstoffes, der Polyester basiert ist, und 15-85 Gewichts-%, insbesondere 30-70 Gewichts-% eines zweiten Schmelzklebstoffes, der Polyamid basiert ist. Dabei soll die Summe der Bestandteile 100% der Schmelzklebstoffmischung und insbesondere 100% des Schmelzklebstoffsystems ergeben.

In einer Ausführungsform erfolgt die Verwendung eines Schmelzklebstoffs aus einem Schmelzklebstoffsystem zum Verkleben von Filterelementen mittels Schmelzklebstoffspuren, wobei das Schmelzklebstoffsystem eine Schmelzklebstoffmischung umfasst, die Schmelzklebstoffmischung umfassend 15-85 Gewichts-%, insbesondere 30-70 Gewichts-%, eines ersten Schmelzklebstoffes, der Polyester basiert ist, und 15-85 Gewichts-%, insbesondere 30-70 Gewichts-%, eines zweiten Schmelzklebstoffes, der Polyamid basiert ist, wobei die Gewichtsanteile des ersten und des zweiten Schmelzklebstoffes zusammen 100 Gewichts-% der Schmelzklebstoffmischung ergeben, wobei die Schmelzklebstoffmischung einen Anteil von mehr als 75 Gewichts-%, insbesondere mehr als 85 Gewichts-%, besonders bevorzugs mehr als 95 Gewichts-% an dem Schmelzklebstoffsystem hat, wobei der Rest aus Füllstoffen wie Kreide und/oder Pigmenten wie Titandioxid als Weißpigment und/oder einem klebrig machenden Harz und/oder-mindestens einem weiteren Schmelzklebstoff auf Polykondensat-Basis gebildet ist.

Dieses Schmelzklebstoffsystem hat überraschend den Vorteil, dass damit ein insbesondere regemäßig unterbrochener, spurförmiger Auftrag des Schmelzklebstoffes insbesondere mittels Auftragsdüsen auf ein Substrat ohne oder weitestgehend ohne die Bildung von Schmelzklebstofffäden möglich ist.

Die Mengenangaben zu dem ersten und dem zweiten Schmelzklebstoff sind dahingehend zu verstehen, dass sowohl der erste als auch der zweite Schmelzklebstoff wiederum aus mehreren jeweils Polyester oder Polyamid basierten Schmelzklebstoffen gebildet sein können, insbesondere um eine Feineinstellung von Materialparametern und mechanischen Eigenschaften vornehmen zu können.

In einer Ausführungsform hat die Schmelzklebstoffmischung einen Anteil von mehr als 75 Gewichts-%, bevorzugt mehr als 85 Gewichts-%, besonders bevorzugt mehr als 95 Gewichts-%, insbesondere 100 Gewichts-% an dem Schmelzklebstoffsystem, wobei der Rest aus Füllstoffen wie Kreide und/oder Pigmenten wie Titandioxid als Weißpigment und/oder einem klebrig machenden Harz (aromatische, aliphatische oder cycloaliphatische Kohlenwasserstoff-Harze oder modifizierte oder hydrierte Versionen von diesen, beispielsweise Kolophonium(-ester) oder aliphatische oder alicyclische Petroleum-Kohlenwasserstoffharze oder deren hydrierte Derivate; wie beispielsweise aus WO 2007/057059 A1 bekannt) und/oder Paraffin und/oder einem weiteren Schmelzklebstoff auf Polykondensat-Basis gebildet ist.

In einer Ausführungsform enthält das Schmelzklebstoffsystem zwischen 0-25 Gewichts-% Additive oder Füllmittel, die aus den nachfolgend genannten Additiven und Füllmitteln der Basisschmelzklebstoffe, nämlich des ersten, Polyester basierten Schmelzklebstoffes und des zweiten, Polyamid basierten Schmelzklebstoffes gewählt sein können.

In einer Ausführungsform enthält der Polyester basierte Schmelzklebstoff als Additiv ein Carbodiimid, Calciumoxid oder ein Anhydrid, insbesondere zur Verbesserung der Hydrolysebeständigkeit und/oder der Klebeeigenschaften, insbesondere in einem Gewichtsanteil von 0-5%.

In einer Ausführungsform enthält der Polyester basierte Schmelzklebstoff als Additiv ein Wachs, insbesondere Paraffin und/oder ein Oxidwachs oder ein pulverförmiges Additiv, insbesondere pyrogene Kieselsäure, insbesondere zur Beschleunigung der Kristallisation, insbesondere in einem Gewichtsanteil von 0-5%.

In einer Ausführungsform weist der Polyester basierte Schmelzklebstoff eine Dichte zwischen 1,15 und 1,35 g/cm³, bevorzugt 1,2-1,3 g/cm³, besonders bevorzugt 1,23-1,27 g/cm³ auf.

In einer Ausführungsform weist der Polyamid basierte Schmelzklebstoff eine Dichte zwischen 0,95 und 1 g/cm³, bevorzugt 0,97-0,99 g/cm³ auf.

In einer Ausführungsform weist der Polyester basierte Schmelzklebstoff eine Reißdehnung von >50%, bevorzugt >70%, besonders bevorzugt >90°C auf, insbesondere gemessen nach ISO 527.

In einer Ausführungsform weist der Polyester basierte Schmelzklebstoff eine Schmelztemperatur zwischen 150°C und 170 °C, bevorzugt zwischen 150°C und 160°C auf.

In einer Ausführungsform weist der Polyamid basierte Schmelzklebstoff eine Schmelztemperatur zwischen 180°C und 210 °C auf.
In einer Ausführungsform weist der Polyamid basierte Schmelzklebstoff eine Erweichungstemperatur kleiner 188°C, bevorzugt kleiner 175°C, besonders bevorzugt kleiner 165°C auf.

In einer Ausführungsform weist der Polyamid basierte Schmelzklebstoff eine Verarbeitungstemperatur zwischen 180°C und 230°C auf.

In einer Ausführungsform ist der Polyester basierte Schmelzklebstoff aus einer Komposition von Grundstoffen, die Komposition umfassend:
e. mindestens eine Säure, insbesondere Phtalsäure oder Isophtalsäure oder Terephthalsäure oder Adipinsäure oder Butandisäure oder 6-Hydro-xyhexansäure oder einer Mischung aus mindestens zwei dieser Säuren, insbesondere zur Reduzierung der Kristallinität,
f. und mindestens ein Diol, insbesondere 1,2-Ethandiol oder 1,4-Butandiol oder Neopentylglycol oder 1,6-Hexandiol oder Cyclohexandimethanol oder Diethylenglykol oder einer Mischung mindestens zwei dieser Diole, insbesondere zur Reduzierung der Kristallinität,
insbesondere durch Polykondensation gebildet.

In einer Ausführungsform ist der Polyester basierte Schmelzklebstoff aus einer Komposition von Grundstoffen, die Komposition umfassend 30-50 Gewichts-%, bevorzugt 30-45 Gewichts-%, besonders bevorzugt 30-40 Gewichts-% Butandiol oder Ethandiol oder eine Mischung daraus gebildet.

In einer Ausführungsform ist der Polyester basierte Schmelzklebstoff aus einer Komposition von Grundstoffen, die Komposition umfassend >20 Gewichts-%, bevorzugt >30 Gewichts-% Terephthalsäure gebildet, insbesondere zur Reduzierung der Fadenzugneigung und/oder der Erhöhung des Schmelzpunktes.

In einer Ausführungsform ist der Polyester basierte Schmelzklebstoff aus einer Komposition von Grundstoffen, die Komposition umfassend <65 Gewichts-%, bevorzugt <45 Gewichts-%, besonders bevorzugt <35 Gewichts-% Terephthalsäure gebildet, insbesondere zur Reduzierung der Fadenzugneigung.

In einer Ausführungsform ist der Polyester basierte Schmelzklebstoff aus einer Komposition von Grundstoffen, die Komposition umfassend >10 Gewichts-%, bevorzugt >20 Gewichts-%, besonders bevorzugt >25 Gewichts-% Adipinsäure gebildet, insbesondere zur Reduzierung des Schmelzpunktes und/oder der Fadenzugneigung.

In einer Ausführungsform ist der Polyester basierte Schmelzklebstoff aus einer Komposition von Grundstoffen, die Komposition umfassend <40 Gewichts-%, bevorzugt <30 Gewichts-% Adipinsäure gebildet, insbesondere zur Reduzierung des Schmelzpunktes und/oder der Fadenzugneigung.

In einer Ausführungsform ist der Polyamid basierte Schmelzklebstoff aus einer Komposition von Grundstoffen, die Komposition umfassend und <30 Gewichts-%, bevorzugt <25 Gewichts-% Sebazinsäure gebildet, insbesondere zur Verbesserung der Wärmestandfestigkeit und/oder zur Reduzierung der Fadenzugneigung.

In einer Ausführungsform ist der Polyamid basierte Schmelzklebstoff aus einer Komposition von Grundstoffen, die Komposition umfassend:
g. mindestens eine Säure, insbesondere Adipinsäure oder Azelainsäure oder Sebazinsäure oder Dimerfettsäure oder eine Mischung aus mindestens zwei dieser Säuren,
h. und mindestens ein Amin, insbesondere Ethylendiamin oder Hexamethylendiamin oder 2,2,4-Trimethylhexamethylendiamin oder ε-Caprolactam oder 1-Amino-3-aminomethyl-3,5,5-trimethylcyclohexan (Isophorondiamin) oder Piperazin oder eine Mischung aus mindestens zwei dieser Amine,
insbesondere durch Polykondensation gebildet.

In einer Ausführungsform ist der Polyamid basierte Schmelzklebstoff aus einer Komposition von Grundstoffen, die Komposition umfassend 50-90 Gewichts-%, bevorzugt 60-80 Gewichts-%, besonders bevorzugt 60-70 Gewichts-% ε-Caprolactam oder Hexamethylendiamin oder 2,2,4-Trimethylhexamethylendiamin oder einer Mischung aus mindestens zwei dieser Amine gebildet.

In einer Ausführungsform ist der Polyamid basierte Schmelzklebstoff aus einer Komposition von Grundstoffen, die Komposition umfassend >5 Gewichts-%, bevorzugt >10 Gewichts-%, besonders bevorzugt >15 Gewichts-% Adipinsäure gebildet, insbesondere zur Verbesserung der Wärmestandfestigkeit und/oder zur Reduzierung der Fadenzugneigung und/oder zur Erhöhung der Reißdehnung.

In einer Ausführungsform ist der Polyamid basierte Schmelzklebstoff aus einer Komposition von Grundstoffen, die Komposition umfassend und <30 Gewichts-%, bevorzugt <25 Gewichts-% Adipinsäure gebildet, insbesondere zur Verbesserung der Wärmestandfestigkeit und/oder zur Reduzierung der Fadenzugneigung.

In einer Ausführungsform beträgt der Gesamtanteil der Adipinsäure an den Grundstoffen des Polyamid basierten Schmelzklebstoffes und des Polyester basierten Schmelzklebstoffes >5 Gewichts-%, bevorzugt >10 Gewichts-%, besonders bevorzugt >15 Gewichts-% und gleichzeitig <35 Gewichts-%, bevorzugt <30 Gewichts-% und besonders bevorzugt <25 Gewichts-%, insbesondere zur Verbesserung der Wärmestandfestigkeit und/oder zur Reduzierung der Fadenzugneigung.

In einer Ausführungsform umfasst der Schmelzklebstoff eine Schmelzklebstoffmischung, die Mischung umfassend:
i. zwischen 30 und 70 Gewichts-%, bevorzugt 45-55 Gewichts-% eines ersten Polyester basierten Schmelzklebstoffes,
j. zwischen 30 und 70 Gewichts-%, bevorzugt 45-55 Gewichts-% eines zweiten Polyamid basierten Schmelzklebstoffes.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Figuren näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
- Figur 1: eine Ansicht einer erfindungsgemäßen Ausführungsform eines Filters;
- Figur 2: eine Ansicht einer weiteren Ausführungsform eines erfindungsgemäßen Filters;
- Figur 3: die Detailansicht einer Anordnung der Klebstoffspuren auf einem erfindungsgemäßen Filters;
- Figur 4: die Detailansicht einer alternativen Anordnung der Klebstoffspuren auf einem erfindungsgemäßen Filters;
- Figur 5: ein Ausführungsbeispiel des Ablaufs eines erfindungsgemäßen Verfahrens zur Herstellung eines Filterelements.

### Ausführungsform(en) der Erfindung

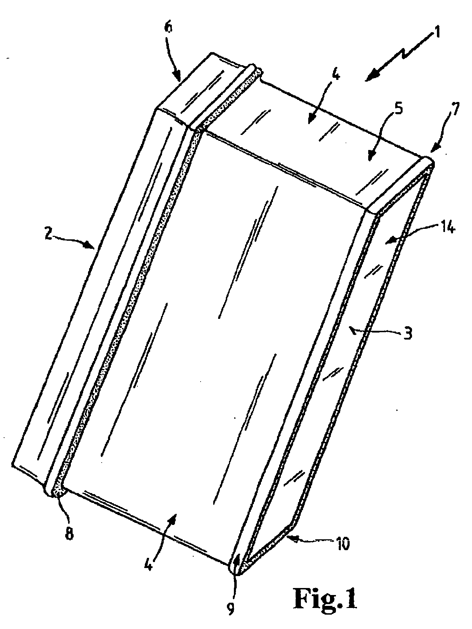

Figur 1 zeigt ein Filterelement 1 mit einer rohseitigen Anströmseite 2 und einer reinseitigen Abströmseite 3. Das Filterelement wird durch ein mehrfach gefaltetes Filtermedium 14 gebildet, wobei sich die Falten zwischen der Anströmseite und der Abströmseite erstrecken, d. h. es befinden sich jeweils Faltenspitzen auf der Anströmseite und der Abströmseite. Die nicht durchströmten Seitenflächen des Filterelements 4 sind insbesondere von einem Polyestervlies umgeben, welches auf seiner dem Filterelement zugewandten Seite mit einer insbesondere mit dem erfindungsgemäßen Schmelzklebstoff gebildeten Schmelzklebstoffschicht versehen ist. Diese Schmelzklebstoffschicht stellt eine flächige Verklebung des Polyestervlieses mit dem Filterelement her, wobei auch die Stirnseite 5 des Filterbalges abgedichtet wird. Das Filterelement 1 umfasst einen Hauptrahmen 6 und einen Hilfsrahmen 7, wobei der Hauptrahmen eine axiale Dichtung 8 trägt, welche in Richtung der Abströmseite 3 dichtet und in eine Nut des Hauptrahmens oder in eine Nut zwischen Hauptrahmen und Seitenflächen 4 eingebracht ist. Der Hilfsrahmen ist mit den Seitenflächen 4 durch eine Klebeverbindung verbunden und weist radiale Flächen 9 und axiale Flächen 10 zur Abstützung des Filterelements in einem nicht dargestellten Gehäuse auf.

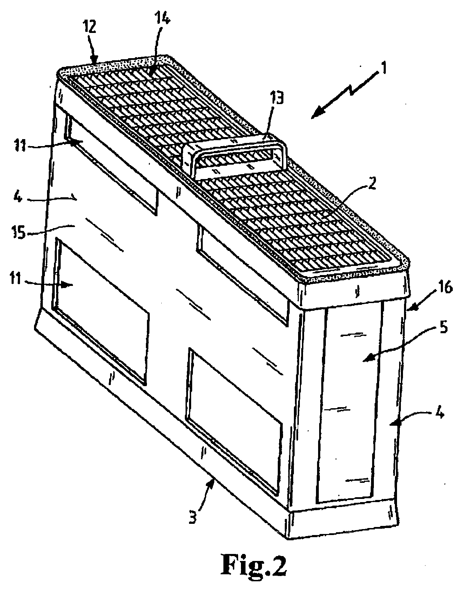

Figur 2 zeigt eine Ausführungsform eines Filterelements 1 mit einer rohseitigen Anströmseite 2 und einer reinseitigen Abströmseite 3. Auf den nicht durchströmten Seitenflächen 4 des Filtermediums 14 ist ein Kunststoffrahmen 16 mittels einer insbesondere mit dem erfindungsgemäßen Schmelzklebstoff gebildeten Schmelzklebstoffverbindung aufgebracht, wobei auf den Stirnseiten 5 durch den Schmelzklebstoff auch die Abdichtung der Stirnseite erfolgt. Auf den Endseiten 15 sind Öffnungen in den Kunststoffrahmen 16 eingebracht. Der Kunststoffrahmen 16 trägt auf der Anströmseite 2 eine axiale Dichtung 12, welche mit einer Dichtfläche eines nicht gezeigten Gehäuses in Eingriff bringbar ist. Ferner ist ein Griff 13 vorgesehen, welcher mit dem Kunststoffrahmen 16 in Verbindung steht und zur besseren Handhabung des Filterelements 1 dient.

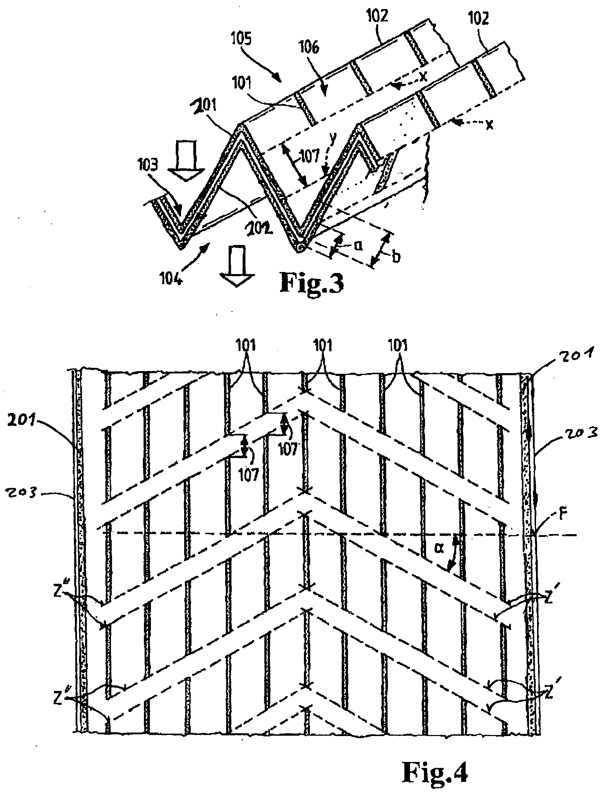

Figur 3 zeigt die Detailansicht einer Anordnung verschiedener Klebstoffspuren auf einem erfindungsgemäßen Filterelement. In dieser Ausführungsform sind in die Falten Stabilisierungsspuren 101 insbesondere aus dem erfindungsgemäßen Schmelzklebstoff eingebracht, welche sich zwischen Faltenspitzen 102 und Faltengrund 103 erstrecken. Dabei sind sowohl auf der Reinseite 104 als auch auf der Rohseite 105 Stabilisierungsspuren 101 eingebracht. Es werden dabei vor dem Aufstellen der einzelnen Falten mindestens zwei insbesondere durchgehende Stabilisierungsspuren 101 zueinander parallel und senkrecht zu der Richtung der Faltkanten 102, 103 auf das Filtermedium 106 aufgebracht. Die insbesondere ansonsten durchgehenden Stabilisierungsspuren 101 sind in insbesondere regelmäßigen Abständen durch eine Unterbrechung 107 unterbrochen. Auf der Rohseite 105 ist die Klebstoffspur einmal zwischen Faltenspitze und Faltengrund unterbrochen. Die Unterbrechung 107 befindet sich dabei mittig zwischen Faltenspitze und Faltengrund und entspricht in ihrer Länge zwischen einem Drittel und der Hälfte der Faltenhöhe. Die Unterbrechung 107 beginnt in einem Abstand b vom rohseitigen Faltengrund 103. Damit werden die Falten rohseitig nur im Bereich des Faltengrundes und der Faltenspitzen verklebt. Reinseitig ist eine Unterbrechung der Klebstoffspur über eine Länge a vorgesehen, welche die Rohseitige Faltenspitze umgibt. Somit sind die Falten rohseitig im Bereich der Faltenspitzen nicht verklebt.

Die Abstände a und b von rohseitigem Faltengrund und reinseitiger Faltenspitze sind so ausgebildet, dass sich die Unterbrechung 107 der reinseitigen und der rohseitigen Klebstoffspur nicht überschneiden. Damit ist sichergestellt, dass sowohl im Bereich der reinseitigen Faltenspitzen als auch in der Nähe des reinseitigen Faltengrundes eine Überlappung der reinseitigen 104 und rohseitigen 105 Klebstoffspur 101 gebildet ist.

Die durch die Anfangs- und Endpunkte der einzelnen Klebstoffspurenabschnitte gebildeten Geraden x und y verlaufen parallel zu den Faltkanten. Ferner sind stirnseitig ununterbrochene Dichtspuren 201 auf der Rohseite und fakultativ ununterbrochene Dichtspuren 202 auf der Reinseite vorgesehen, welche beim Aufstellen der Falten die aufgestellten Falten derart unter Bildung einer Faltentasche seitlich verschließt, dass Roh- und Reinseite des Filterelements dichtend voneinander getrennt sind. Dabei sind die reinseitigen Dichtspuren 202 in Bezug auf die Trennung von Roh- und Reinseite nicht unbedingt erforderlich, jedoch hinsichtlich der Stabilität des Filterelements vorteilhaft.

Figur 4 zeigt eine alternative Anordnung der insbesondere mit dem erfindungsgemäßen Schmelzklebstoff gebildeten Klebstoffspuren auf einem erfindungsgemäßen Filterelement, wobei die Darstellung die Filtermedienbahn in flachem, ungefalteten Zustand zeigt. In dieser Ausführungsform sind die Anfangs- und Endpunkte der Unterbrechungen der Stabilisierungsspuren 101 an einer Mehrzahl von Geraden z ausgerichtet, welche zueinander parallel verlaufen und mit den Faltkanten F einen Winkel α von 10-80°, bevorzugt 45 +/-15° bilden. Dabei verlaufen die Anfangs- und Endpunkte der Unterbrechungen der Stabilisierungsspuren an mindestens zwei Geradenscharen z' und z", wobei jede Geradenschar zueinander parallele Geraden umfasst, wobei sich die korrespondierenden Geraden auf dem Filtermedium schneiden, wodurch ein pfeilförmiger oder zickzackförmiger Verlauf der Unterbrechungen 107 der Stabilisierungsspur 101 auf dem Filtermedium gebildet wird. </disclosure>Rohseitige Dichtspuren 201 verlaufen entlang der Stirnkanten 203 des Filtermediums derart, dass die Dichtspuren beim Aufstellen der Falten diese derart unter Bildung einer Faltentasche seitlich verschließt, dass Roh- und Reinseite des Filterelements dichtend voneinander getrennt sind.

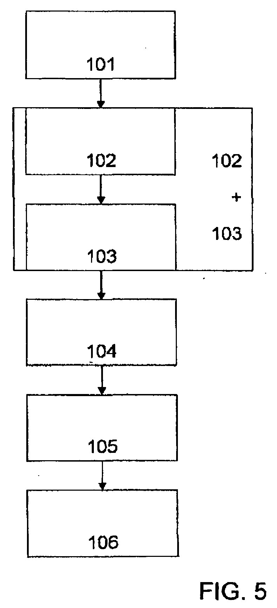

In Figur 5 ist ein Ausführungsbeispiel des Ablaufs eines erfindungsgemäßen Verfahrens zur Herstellung eines Schmelzklebstoffsystems gezeigt.

Das Verfahren zur Herstellung des erfindungsgemäßen Filterelements umfasst in dieser Ausführungsform die Schritte:
(101) Durchmengen der Granulate der beiden Schmelzklebstoffe vor dem Erhitzen,
(102) Aufschmelzen des ersten Schmelzklebstoffes, der Polyester basiert ist, und des zweiten Schmelzklebstoffes, der Polyamid basiert ist, insbesondere in erfindungsgemäßer Zusammensetzung und erfindungsgemäßem Mengenverhältnis, beispielsweise in einem Tankschmelzgerät,
(103) insbesondere dynamisches Mischen der beiden Schmelzklebstoffe, insbesondere unter Erzeugung von Scherkräften in der Schmelze zu einer Schmelzklebstoffmischung, beispielsweise mit einem Rührwerk oder einem Förderwerk mit Förderschnecken oder Zahnrädern, wobei die Schritte 102 und 103 jedoch vorzugsweise gleichzeitig als Schritt (102+103) in einem Extruder durchgeführt werden,
(104) fakultatives Aufschäumen des aufgeschmolzenen Schmelzklebstoffsystems mit einem Gas, insbesondere Stickstoff, Luft, CO₂ oder dergleichen,
(105) Applikation der geschmolzenen Schmelzklebstoffmischung auf ein bahnförmiges Filtermedium in mindestens einer Klebstoffspur, insbesondere mittels einer Auftragsdüse, insbesondere in mindestens einer, insbesondere regelmäßig oder unregelmäßig unterbrochenen, Klebstoffspur, insbesondere ohne zwischenzeitliches Abkühlen, insbesondere nur 0-5 Minuten nach dem Mischen,
(106) Aushärten der mindestens einen Klebstoffspur unter Verbindung von Abschnitten einer Filtermediumbahn des Filtermediums mit anderen Abschnitten der selben Filtermediumbahn oder mit Abschnitten einer zweiten, insbesondere gewellten Filtermediumbahn und/oder mit einem Vorabscheidervlies.

Das Aushärten der vor dem Aufstellen der Falten aufgetragenen Schmelzklebstoffspur kann insbesondere nach dem Aufstellen der Falten des Faltenbalges derart erfolgen, dass während des Aushärtens ein Verkleben der Falten durch die applizierte Schmelzklebstoffmischung erfolgt.

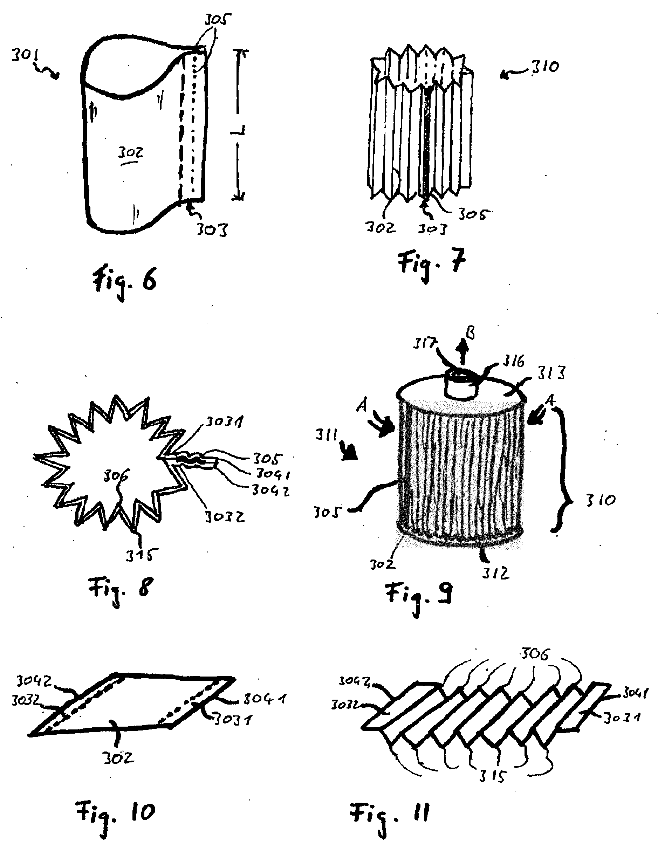

Fig. 6 zeigt ein Ausführungsbeispiel für einen ringförmigen Filterbalg. Dabei ist der Filterbag 301 aus einem Bogen eines flächigen Filtermediums, wie beispielweise einem Filtervliesmaterial gebildet. Zunächst sind dann rechteckige Filtermaterialbögen so geformt, dass Endabschnitte des Bogens 303 aneinander schmiegen. In Fig. 1 ergibt sich somit ein Endlosfilterbalg 3022, wobei die Endabschnitte 303 von einer Dichtspur 305 aus dem Schmelzklebstoff gehalten sind, welche zwischen den Endabschnitten 303 des Bogens verläuft. Die Dichtspur 5 ist dabei strichpunktiert dargestellt. Der Filterbalg 301 kann beispielweise in einer Filtereinrichtung in einen Filtertopf eingeführt werden, so dass das zu filternde Fluid, wie beispielweise Kraftstoff, Öl oder auch Luft durch das Filtermedium treten kann und dabei gereinigt wird.

Dabei verbindet die Dichtspur 305 über die gesamte Länge L bzw. in der Darstellung der Fig. 1 über die gesamte Höhe, die jeweiligen beiden miteinander verbundenen Endabschnitte fluiddicht.

Fig. 7 zeigt eine perspektivische Darstellung eines weiteren Ausführungsbeispiels, wobei ein ringförmiger Filterbalg 310 für ein Filterelement aus einem zickzackförmig gefalteten Filtermaterial gebildet ist. Das zickzackförmige Filtermaterial wird zu einem Balg 302 geformt, indem Endabschnitte oder Endfaltenabschnitte 303 durch die Dichtspur 305 miteinander verbunden sind. Durch die zickzackförmige Faltung ergibt sich einen größere Oberfläche des Filtermaterials in dem Filterbalg 310. Die Verbindung der Endabschnitte 303 des flächigen Filtermaterials ist in den folgenden Figuren genauer dargestellt.

In Fig. 8 ist ein Querschnitt der in Fig. 7 dargestellten Ausführungsform für einen Filterbalg für ein Filterelement gezeigt. In einer Darstellung der Fig. 8 schaut man auf das Faltenprofil in der Orientierung der Fig. 7 von oben oder nach unten auf den Faltenbalg. Somit ergeben sich Faltungen 306 und 315 mit jeweils entgegengesetzter Orientierung. Die beiden Endfaltenabschnitte 3031, 3032 werden durch die Dichtspur 305 miteinander verbunden und abgedichtet. Aus dem Innenraum des Faltenbalgs kann durch die miteinander verbundenen Endabschnitte 3031, 3032 kein Fluid entweichen. Die miteinander verbundenen Endabschnitte 3031, 3032 werden verpresst, während die Dichtspur aus Schmelzklebstoff noch flüssig ist, bevorzugt bis der Schmelzklebstoff aushärtet. Das Verpressen erfolgt vorzugsweise mittels profilierter Profile oder Zangen, welche z.B. eine parallel zu den Endfaltenabschnitten verlaufende, wellenförmige oder gezackte Profilierung aufweisen. Dadurch entstehen wie in der Figur gezeigt entsprechend verformte Endabschnitte 3031, 3032 und es wird eine beständigere Verbindung erzeugt. Der zickzackförmige Filtermaterialbogen wird derart umgebogen, dass die beiden Endfaltenabschnitte 3031, 3032 flächig aufeinanderliegen. Dabei bilden die Endkanten 3041, 3042 eine gemeinsame Abschlusskante.

Fig. 9 zeigt ein Filterelement 311, beispielsweise als Öl- oder Kraftstofffilter, die mit einem wie vor beschriebenen Filterelement 310 ausgeführt ist. Das Filterelement bzw. der Kraftstofffilter 311 umfasst ein aus zickzackförmigem Filtermaterial gebildeten Faltenbalg 302, 310, der zwischen zwei Deckeln 312, 313 gehalten ist. Der Faltenbalg entspricht einem Filterelement 310, bei dem zwei Endabschnitte durch die Dichtspur 305 miteinander fluiddicht verbunden sind.

Der obere Deckel 313 ist mit einem Anschluss 316 versehen, der eine Öffnung 317 aufweist. Zu filterndes Fluid kann beispielsweise in Pfeilrichtung A in den Innenraum des Faltenbalgs 310 eintreten, durch die Falten des Filtermaterials strömen und in Pfeilrichtung B das Filterelement 311 durch die Öffnung 317 verlassen. Alternativ ist eine Durchströmung in entgegengesetzter Richtung denkbar. Selbstverständlich sind weitere Filtereinrichtungen denkbar. Beispielweise kann das Filterelement in einen Filtertopf eingeführt oder auch ein eckiger Balg gebildet werden. Man spricht bei den Deckeln 312, 313 auch von Endscheiben. Die Dichtspur 305 steht jeweils in dichter Verbindung mit den Deckeln 312, 313, so dass eine zuverlässige Dichtung zwischen Roh- und Reinseite erfolgt. Im Falle eines angeschweißten Deckels, eines Polyurethandeckels oder einem Deckel aus einem unter Wärmeeinwirkung aufquellenden und aushärtenden Material sind die Enden der Dichtspur 305 in den Deckel eingebettet, im Falle eines mit dem Filterbalg 302, 320 verklebten Deckels sind die Enden der Dichtspur 305 in die Klebstoffschicht zwischen Deckel und Filterbalg eingebettet oder mit dieser verbunden.

Die Darstellungen in Fign. 10, 11 dienen der Erläuterung von Varianten des Herstellungsverfahrens für entsprechende Filterelemente. In einem ersten Schritt, wie in Fig. 10 dargestellt, wird ein flächiger Filtermaterialbogen 302 bereitgestellt. Der Filtermaterialbogen 302 ist beispielsweise rechteckig geformt. Es sollen somit die gegenüberliegenden Endabschnitte 3031, 3032 miteinander verbunden werden, damit ein rohrförmiger Filterelementkörper ausgebildet wird. Dabei werden in der Folge insbesondere die Endkanten 3041, 3042 aneinandergelegt. Um einen zickzackförmigen Faltenbalg, wie in Fig. 7-9 dargestellt, auszubilden, wird der Filtermaterialbogen zunächst plissiert bzw. gefaltet. Dies ist in Fig. 11 dargestellt. Es sind verschiedene Verfahren zum zickzackförmigen Falten von Filtermaterialien bekannt. Es können z. B. gegeneinander greifende Faltmesser eingesetzt werden, die Faltungen unterschiedlicher Orientierung 306, 315 in dem Filterbogen hervorrufen. Auch rotierende Messeranordnungen sind bekannt.

In Fig. 11 sieht man einen gefalteten Filtermaterialbogen, wobei die Endabschnitte 3031, 3032 nunmehr Endfaltenabschnitten 3031, 3032 entsprechen.

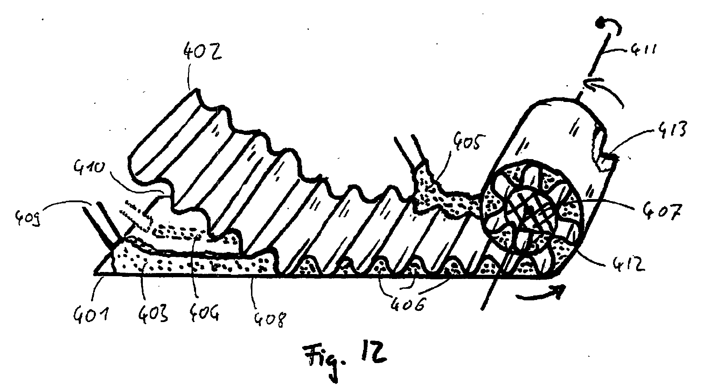

In Figur 12 ist ein Verfahren zur Herstellung eines erfindungsgemäßen Filterkörpers mit wechselseitig verschlossenen Kanälen dargestellt. Eine Glattlage 401 und eine Welllage 402 eines bahnförmigen Filtermaterials werden zur Bildung eines Halbzeugs aufeinander gelegt. Dabei wird eine ununterbrochene Dichtspur 403 aus flüssigen Schmelzklebstoff zwischen Glattlage 401 und Welllage 402 auf die Glattlage entlang einer Stirnkante 408 der Glattlage 401 mittels einer Düse 409 aufdosiert. Beim Aufeinanderlegen von Glattlage und Welllage bilden sich anschließend durch die Dichtspur 403 Verschlussstopfen 406, die die zwischen Glattlage und Welllage gebildeten Kanäle einseitig fluiddicht verschließt. Fakultativ wird zusätzlich eine flache Haftspur 404 aus Schmelzklebstoff aufgetragen, welche keine Kanäle verschließt, jedoch eine Verklebung zwischen Glattlage 401 und Welllage 402 erzeugt. Das so gebildete Halbzeug wird anschließend entlang der zweiten, der ersten gegenüberliegenden Stirnkante 410 mit einer weiteren Dichtspur 405 versehen und anschließend insbesondere um einen Kern 407 aufgewickelt, wobei wiederum Kanäle entstehen, die durch Verschlussstopfen verschlossen sind. Eine Durchströmung der Kanäle entlang der Wickelachse 411 ist damit nur möglich, indem in einen endseitig durch Verschlussstopfen 406 verschlossenen Kanal 412 eintretendes Fluid durch eine Filtermedienlage (Glatt- oder Welllage) in einen anfangsseitig verschlossenen Kanal 413 übertritt, wodurch das Fluid gereinigt wird.

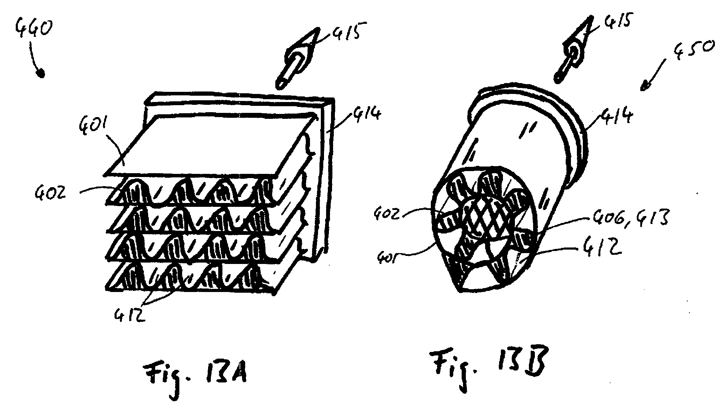

Eine alternative Möglichkeit zur Bildung eines z. B. in Durchströmungsrichtung 415 durchströmbaren Filterelements aus dem vorgenannten Halbzeug ist in Fig. 13A gezeigt, in welcher das Halbzeug abschnittsweise analog zu Zig. 12 aufeinander geklebt wird. Das Filterelement ist an einer durchströmten Fläche mit einer Dichtung 414 zur Trennung von Roh- und Reinseite in einem Filtergehäuse versehen. In Fig. 13B wiederum ist der nach Fig. 12 erhältliche gewickelte Filterkörper verwendet. Im Übrigen sind gleiche Merkmale mit gleichen Bezugszeichen gekennzeichnet.

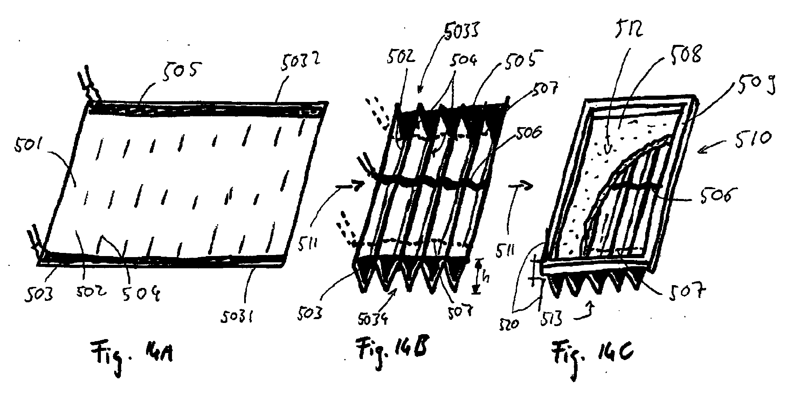

In Fig. 14 A-C ist ein erfindungsgemäßes Verfahren zur Herstellung eines erfindungsgemäßen Filterelement 510 dargestellt. Eine Bahn 501 aus flachem Filtermedium ist bevorzugt bei Filtermedien, welche dies erfordern, bereits z.B. durch Walzen mit Soll-Faltkanten 502, 504 versehen, z. B. durch Verpressen quer zur Bahn- und Vorschubrichtung 511 oder durch Verschweißen entlang der Soll-Faltkanten von ein- oder mehrschichtigen, synthetischen Medien, z. B. Vliese und/oder Gewebe und/oder Netze, z. B. aus thermoplastischen Fasern, insbesondere schmelzgeblasene Fasern. Entlang der Stirnkanten 5031, 5032 der Bahn 501 werden ununterbrochene Klebstoffspuren (Dichtspuren) aus Schmelzklebstoff aufgebracht. In einem zweiten Schritt werden die Falten aufgestellt, siehe Fig. 14B, wodurch die Dichtspuren zwischen zwei Faltkanten 504 über die Faltenhöhe h in dichtenden Kontakt geraten und die Stirnseiten 5033 und 5034 dichtend verschließen, derart, dass die Rohseite 512 von der Reinseite 513 getrennt wird.

In diesem Zustand, wenn die Falten aufgestellt sind, wird auf mindestens eine der Ebenen, welche durch die Faltkanten 502, 504 aufgespannt werden, eine weitere Klebstoffspur (Distanzspur) aufgebracht, welche auf den Faltkanten 504, 502 ununterbrochen über mehrere Faltkanten 504, 502 hinweg, insbesondere senkrecht zu den Faltkanten, aufgebracht ist, insbesondere um den Filterbalg zu stabilisieren und den Abstand zwischen den benachbarten Faltkanten im Betrieb konstant zu halten. Diese Distanzspur verschließt vorzugsweise die Falten nicht in gleicher Weise wie die Dichtspuren 503, 505 sondern verläuft im Wesentlichen (Wellenbildung ist unumgänglich) in der durch die Faltkanten 504, 502 aufgespannten Ebene. Diese Distanzspur kann zusätzlich als Befestigungsmittel für eine Vorabscheidestufe, insbesondere ein eben auf der Anströmseite angeordnetes, ebenes Vorabscheidevlies 508 verwendet werden, wenn dieses aufgelegt wird, solange die Distanzspur noch flüssig ist oder zumindest noch Haftverbindungen erzeugen kann. Zusätzlich oder alternativ können parallel in der zur Distanzspur gleichen Ebene weitere Klebstoffspuren (Vorvliesbefestigungsspuren 507) aufgebracht werden, insbesondere entlang und im Bereich der Stirnseiten 5033 und 5034, z. B. in einem Abstand nicht weiter als 10 cm, vorzugsweise 5 cm von den Dichtspuren zur Mitte hin, zur Anbindung des anschließend aufzulegenden Vorabscheidervlieses 508.

Fig. 14C zeigt eine Ansicht eines insbesondere erfindungsgemäß hergestellten Filterelements 510 mit einem Vorabscheidervlies 508 auf der Rohseite 512, welche von einer Dichtung 509 umgeben ist, welche zum dichtenden Einbau in ein nur schematisch zweidimensional dargestelltes Filtergehäuse 520 dient. Das Vorabscheidervlies 508 ist ausgeschnitten dargestellt, im Ausschnitt sind Abschnitte der Distanzspur 506 und der Vorvliesbefestigungsspur 507 erkennbar. Selbstverständlich kann die Durchströmung auch in entgegengesetzter Richtung erfolgen, in diesem Fall wäre ein Vorabscheidervlies auf der der Dichtung 509 abgewandten Seite wie beschrieben anzubringen.

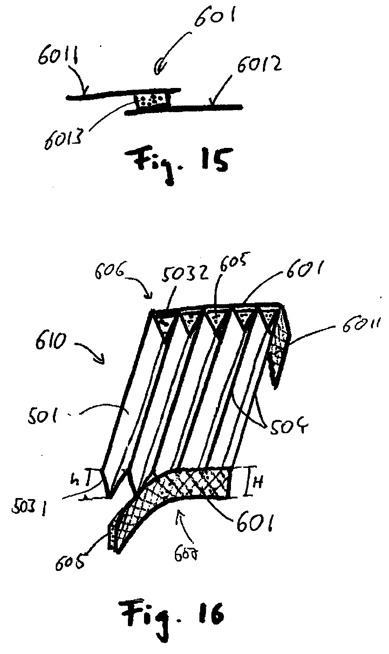

Figur 15 zeigt ein nach einem insbesondere erfindungsgemäßen Verfahren hergestelltes Seitenband aus zwei Abschnitten 6011, 6012, welche mittels einer vorzugsweise mittels Breitschlitzdüse aufgebrachten, breiten Klebstoffspur 6013 aus dem gemäß dieser Erfindung verwendeten Schmelzklebstoffsystem verbunden sind. Die Klebstoffspur ist im Bereich der Überlappung insbesondere ununterbrochen. Die Verwendung dieses Schmelzklebstoffs hat den Vorteil, dass beim Schließen der Auftragsdüsen deutlich weniger Schmelzklebstofffäden entstehen.

Fig. 16 zeigt ein mittels zweier Seitenbänder 601 seitlich, senkrecht zu den Faltkanten 504 abgeschlossenes Filterelement 610 aus einer gefalteten Filtermedienbahn. Die Seitenbänder sind insbesondere nach einem im vorhergehenden Abschnitt beschriebenen Verfahren (s. Fig. 15) aus Abschnitten verbunden. Die Seitenbänder sind insbesondere aus Textil, Kunststoffgewebe, Kunststoffgitter, insbesondere Streckgitter, oder aus Vlies, insbesondere aus thermoplastischen Fasern, insbesondere schmelzgeblasene Fasern. Auf die Seitenbänder 601 ist jeweils eine flache, im Wesentlichen mindestens die Faltenhöhe h überspannende, ununterbrochene Schmelzklebstoffspur (Dichtspur) 605 aus dem gemäß dieser Erfindung verwendeten Schmelzklebstoff aufgebracht, insbesondere mittels einer Breitschlitzdüse. Die Breite der Schmezklebstoffspur ist maximal so breit wie das Seitenband 601 und überragt dessen Kanten nicht. Das Seitenband mit dem noch flüssigen Schmelklebstoff gegen die durch die Stirnkanten 5032, 5031 der Bahn 501 aus Filtermedium gepresst wobei die Dichtspur 605 die aufgestellten Falten derart unter Bildung einer Faltentasche seitlich verschließt, dass Roh- und Reinseite 606, 607 des Filterelements dichtend voneinander getrennt sind. Dabei können Seitenflächen des Seitenbandes 601 als Dichtflächen in einem Filtergehäuse, insbesondere von einen Innenraumluftfiltersystem, insbesondere für die Filtration von Innenraumluft von Straßenfahrzeugen, Land- und Baumaschinen. Zusätzlich kann auf ähnliche Weise ein weiteres, dichtendes Seitenband 6011 quer zu den ersten Seitenbändern 601 entlang der Faltkanten vorgesehen sein, ebenfalls mit einer im Wesentlichen mindestens die Faltenhöhe h überspannenden, ununterbrochenen Schmelzklebstoffspur (Dichtspur) 605 aus dem gemäß dieser Erfindung verwendeten Schmelzklebstoff am Ende der Bahn 501 befestigt.

Die nachfolgenden Beispiele zeigen für ein erfindungsgemäßes Filterelement verwendete oder zum Vergleich herangezogene Schmelzklebstoffsysteme auf.

### Beispiel 1

Ein Polyester-Schmelzklebstoff (Sika SikaMelt 9120) mit einer Dichte von 1,25 g/cm³ und einer Reißdehnung von im Bereich von 75-115 % und ein PolyamidSchmelzklebstoff (Henkel Marcomet 6208) mit einer Dichte von 0,98 g/cm³ werden jeweils separat unter Mischen auf Verarbeitungstemperatur (200°C) erwärmt. Die Fadenzugneigung wird qualitativ derart ermittelt, dass ein 1 mm dicker Metallrundstab in die Schmelze getaucht und ruckartig herausgezogen wird. Bei Beispiel 1 verbleibt bei beiden Schmelzklebstoffen ein Schmelzklebstofftropfen an dem Metallrundstab, an welchem sich direkt beim Herausziehen aus der Schmelze ein Schmelzklebstofffaden verbleibt, der auskühlt und aushärtet. Ein verbleibender, verfestigter Faden ist erkennbar. Die Fadenzugneigung wird deshalb als hoch beurteilt. Ferner wird das Granulat der beiden genannten Schmelzklebstoffe gemischt und das durchmischte Granulat auf 200°C erhitzt und gemeinsam aufgeschmolzen. Sofort danach erfolgt, um die Entmischung gering zu halten, ein Auftrag mittels einer direkt mit einer Zahnradpumpe gekoppelten Auftragsdüse auf ein flaches Filtermedium. Dabei ist überraschend eine geringere Bildung von Fäden als bei der Verwendung der beiden Schmelzklebstoffe in separater Form festzustellen. Auch wird die Fadenzugneigung der Schmelzklebstoffmischung qualitativ beurteilt, derart, dass ein 1 mm dicker Metallrundstab in die vorher nochmals in einer auf Bearbeitungstemperatur erwärmten Porzellanschale dynamisch vermischte Schmelze getaucht und ruckartig herausgezogen wird. Es verbleibt ein Schmelzklebstofftropfen an dem Metallrundstab, in welchen sich der direkt nach dem Herausziehen des Metallrundstabes aus der Schmelze gebildete Faden zurückzieht. Ein verbleibender Faden ist nicht erkennbar. Die Fadenzugneigung wird deshalb als gering beurteilt.

### Beispiel 2

Es werden in gleichen Gewichtsanteilen ein Polyesterschmelzklebstoff mit einem Schmelzpunkt bei 150-160°C, im Wesentlichen gebildet aus 40 Gewichts-% Butandiol, 33 Gewichts-% Terephthalsäure, 27 Gewichts-% Adipinsäure und ein Polyamidschmelzklebstoff mit einem Schmelzpunkt bei 130°C, gebildet aus 67 Gewichts-% ε-Caprolactam, 5 Gewichts-% 2,2,4 Trimethylhexamethylendiamin, 12 Gewichts-% 1-Amino-3-aminomethyl-3,5,5-trimethylcyclohexan und 16 Gewichts-% Adipinsäure in Granulatform durchmischt und gemeinsam unter dynamischem Mischen aufgeschmolzen. Die Fadenzugneigung wird qualitativ derart ermittelt, dass ein 1 mm dicker Metallrundstab in die Schmelze getaucht und ruckartig herausgezogen wird. Bei Beispiel 2 verbleibt ein Schmelzklebstofftropfen an dem Metallrundstab, in welchen sich der direkt nach dem Herausziehen des Metallrundstabes aus der Schmelze gebildete Faden zurückzieht. Ein verbleibender Faden ist nicht erkennbar. Die Fadenzugneigung wird deshalb als gering beurteilt.

### Beispiel 3

Der Polyesterschmelzklebstoff (Sika Sikamelt 9420) mit einer Reißdehnung von ca. 50-60% wird in Gewichtsanteilen 60:40, 65:35, 70:30 (der Polyesterschmelzklebstoff jeweils erstgenannt) mit einem Polyamidschmelzklebstoff (Henkel Macromet 6208) mit einer Schmelztemperatur zwischen 188 und 195°C und einer Dichte von 1,02 g/cm³ wie in Beispiel 1 vermischt und auf Fadenzugneigung überprüft.

Bei Beispiel 3 verbleibt ein Schmelzklebstofftropfen an dem Metallrundstab, in welchen sich der direkt nach dem Herausziehen des Metallrundstabes aus der Schmelze gebildete Faden je nach Mischungsverhältnis vollständig oder teilweise zurückzieht. Der Effekt ist dabei deutlich geringer ausgeprägt als bei der Applikation der beiden Schmelzklebstoffe in separater Verwendung.

### Beispiel 4

Der Polyesterschmelzklebstoff aus Beispiel 2 und ein Polyamidschmelzklebstoff mit einer Dichte von 0,97 g/cm³, einem Erweichungspunkt von 190-205 °C (Henkel Macromet 2035) werden zu Gewichtsanteilen 30:70, 50:50 und 70:30 analog Beispiel 1 gemischt und geprüft. Bei Beispiel 4 verbleibt ein Schmelzklebstofftropfen an dem Metallrundstab, in welchen sich der direkt nach dem Herausziehen des Metallrundstabes aus der Schmelze gebildete Faden zurückzieht. Ein verbleibender Faden ist nicht erkennbar oder deutlich kleiner ausgeprägt als bei der Applikation der beiden Schmelzklebstoffe in separater Verwendung wobei ab einem Gewichtsanteil von 70% des genannten Polyesterklebstoffes die Fadenzugneigung wieder zunimmt. Die Fadenzugneigung wird deshalb als gering beurteilt.

## Patentansprüche

1. Filterelement, umfassend einen Filterkörper aus mindestens einer Lages eines flachen, bahnförmigen Filtermediums, welches eine Rohseite von einer Reinseite trennt, z. B. einen zickzackförmig gefalteten Filterbalg, wobei der Filterkörper mittels eines Schmelzklebstoffsystems verklebt ist, wobei das Schmelzklebstoffsystem eine Schmelzklebstoffmischung umfasst, die Schmelzklebstoffmischung umfassend 15-85 Gewichts-%, insbesondere 30-70 Gewichts-%, eines ersten Schmelzklebstoffes, der Polyester basiert ist, und 15-85 Gewichts-%, insbesondere 30-70 Gewichts-%, eines zweiten Schmelzklebstoffes, der Polyamid basiert ist, wobei die Gewichtsanteile des ersten und des zweiten Schmelzklebstoffes zusammen 100 Gewichts-% der Schmelzklebstoffmischung ergeben, wobei die Schmelzklebstoffmischung einen Anteil von mehr als 75 Gewichts-% an dem Schmelzklebstoffsystem hat, wobei der Rest aus Füllstoffen wie Kreide und/oder Pigmenten wie Titandioxid als Weißpigment und/oder einem klebrig machenden Harz und/oder mindestens einem weiteren Schmelzklebstoff auf Polykondensat-Basis gebildet ist, wobei der Filterkörper auf mindestens einer Fläche des flachen, bahnförmigen Filtermediums eine dichtende, ununterbrochene Klebstoffspur aus dem Schmelzklebstoffsystem aufweist, die den Filterkörper derart verklebt, dass Roh- und Reinseite des Filterelements dichtend voneinander getrennt sind.

2. Filterelement nach Anspruch 1, **dadurch gekennzeichnet, dass** der Filterkörper ringförmig ist und aus einem zickzackförmig gefalteten Filterbalg aus einem flachen Filtermediumbogen gebildet ist, der ringförmig derart fluiddicht geschlossen ist, dass zwei gegenüberliegende Endabschnitte des Filtermediumbogens, insbesondere parallel zu den Faltkanten, durch eine Klebstoffspur aus dem Schmelzklebstoffsystem, die entlang der Endkanten an den Endabschnitten verläuft, dichtend verbunden sind.

3. Filterelement nach Anspruch 2, **dadurch gekennzeichnet, dass** die Endabschnitte an der Klebstoffspur, insbesondere mit einem wellenförmigen Profil, verpresst sind.

4. Filterelement nach Anspruch 2 - 3, **dadurch gekennzeichnet, dass** die Klebstoffspur entlang der gesamten Länge der Endkanten verläuft.

5. Filterelement nach Anspruch 2 - 4, **dadurch gekennzeichnet, dass** an den axialen Stirnseiten des ringförmigen. Filterkörpers Endscheiben angeordnet sind, die die Stirnseiten dichtend so verschließen, dass die Rohseite von der Reinseite gentrennt wird, wobei die Klebstoffspur dichtend mit den Endscheiben verbunden ist.

6. Filterelement nach Anspruch 1, **dadurch gekennzeichnet, dass** der Filterkörper aus einem Halbzeug aus zwei aufeinanderliegenden Lagen eines Filtermediums gebildet ist, wobei die eine Lage als Flachlage und die zweite Lage als gewellte Lage ausgebildet ist, wobei das Halbzeug gewickelt oder schichtweise aufeinander gestapelt ist, wodurch zwischen den Lagen durchströmbare Kanäle ausbildet werden, wobei die zwei Lagen jeweils durch mindestens eine ununterbrochene Klebstoffspur aus dem Schmelzklebstoffsystem miteinander verbunden sind, wobei die Klebstoffspur auf einer flächigen Seite der Glattlage entlang einer ersten Kante der Glattlage und entlang einer Kante der Welllage zwischen der Glattlage und der Welllage senkrecht derart zu den Wellen verläuft, dass die durchströmbaren Kanäle an einem ersten Ende dichtend verschlossen sind.

7. Filterelement nach Anspruch 6, **dadurch gekennzeichnet, dass** eine zweite ununterbrochene Klebstoffspur aus dem Schmelzklebstoffsystem vorgesehen ist, durch welche die zwei Lagen miteinander verbunden sind, wobei die zweite Klebstoffspur auf der zweiten, der ersten flächigen Seite gegenüberliegenden Seite der Glattlage entlang einer zweiten, der ersten Kante der Glattlage gegenüberliegenden Kante zwischen der Glattlage und der Welllage senkrecht derart zu den Wellen verläuft, dass die durchströmbaren Kanäle an einem zweiten Ende dichtend verschlossen sind, derart, dass ein Filterkörper mit wechselseitig verschlossenen Kanälen gebildet ist.

8. Filterelement nach Anspruch 1, 6 oder 7, **dadurch gekennzeichnet, dass** der Filterkörper aus einem Halbzeug aus zwei aufeinanderliegenden, gewickelten Lagen eines Filtermediums gebildet ist, wobei die eine Lage als Flachlage und die zweite Lage als gewellte Lage ausgebildet ist, wodurch zwischen den zwei Lagen durchströmbare Kanäle ausbildet werden, wobei die zwei Lagen durch mindestens eine Klebstoffspur aus dem Schmelzklebstoffsystem miteinander verbunden sind, wobei die Klebstoffspur auf einer den Wellenbergen zugewandten Seite der Glattlage quer, insbesondere senkrecht derart zu den Wellen verläuft, dass die an der Glattlage anliegenden Wellenberge mit der Glattlage verklebt sind, wobei die Höhe der Klebstoffspur geringer ist als die Höhe der Wellen, so dass die durchströmbaren Kanäle durch diese Klebstoffspur nicht verschlossen sind.

9. Filterelement nach Anspruch 1, **dadurch gekennzeichnet, dass** der Filterkörper aus einem zickzackförmig gefalteten Filterbalg aus einem flachen Filtermediumbogen gebildet ist, wobei entlang der senkrecht zu den Faltkanten verlaufenden Stirnkanten des Filtemediumbogens jeweils eine ununterbrochene Klebstoffspur aus dem Schmelzklebstoffsystem vorgesehen ist, welche die aufgestellten Falten derart unter Bildung einer Faltentasche seitlich verschließt, dass Roh- und Reinseite des Filterelements dichtend voneinander getrennt sind.

10. Filterelement nach vorhergehendem Anspruch, **dadurch gekennzeichnet, dass** die Faltkanten auf mindestens einer Seite des Filterbalges eine Ebene bilden.

11. Filterelement nach vorhergehendem Anspruch, **dadurch gekennzeichnet, dass** eine durch die Faltkanten gebildete Ebene durch eine Dichtung umschlossen ist, die um die Ebene herumläuft, insbesondere aus einem geschäumten Polymer, insbesondere Polyurethan, zur dichtenden Trennung der Rohseite von der Reinseite in einem Filtergehäuse.

12. Filterelement nach Anspruch 1, insbesondere nach Anspruch 10 oder 11, **dadurch gekennzeichnet, dass** der Filterkörper aus einem zickzackförmig gefalteten Filterbalg aus einem flachen Filtermediumbogen gebildet ist, wobei der Filterbalg eine Klebstoffspur aufweist, welche in einer durch die Faltkanten gebildeten Ebene des Filterbalges auf diesen ununterbrochen über mehrere Faltkanten hinweg, insbesondere senkrecht zu den Faltkanten, aufgebracht ist, insbesondere um den Filterbalg zu stabilisieren und den Abstand zwischen den benachbarten Faltkanten im Betrieb konstant zu halten.

13. Filterelement nach einem der Ansprüche 1 oder 10 - 12, **dadurch gekennzeichnet, dass** der Filterkörper aus einem zickzackförmig gefalteten Filterbalg aus einem flachen Filtermediumbogen, mit anströmseitigen Faltkanten und abströmseitigen Faltkanten, gebildet ist und eine Vorabscheiderschicht, insbesondere aus einem Vlies, umfasst, welche auf der durch die anströmseitigen Faltkanten gebildeten Fläche aufliegt, wobei der Filterkörper mittels des Schmelzklebstoffsystems mit der Vorabscheiderschicht verklebt ist, insbesondere mittels Klebstoffpunkten oder Klebstoffspuren, insbesondere mittels mindestens zwei Klebstoffspuren gemäß Anspruch 12.

14. Filterelement nach Anspruch 1 oder 10 - 13, **dadurch gekennzeichnet, dass** der Filterkörper aus einem zickzackförmig gefalteten Filterbalg aus einem flachen Filtermediumbogen gebildet ist, wobei die zickzackförmig verlaufenden Stirnkanten des Filtermediumbogens zwei Stirnflächen aufspannen, wobei auf mindestens einer der Stirnflächen ein Seitenband aus einem Gewebe oder einem Vlies aufgebracht ist, welches mittels einer breiten, flächigen Klebstoffspur aus dem Schmelzklebstoffsystem insbesondere derart verklebt ist, dass das Seitenband mittels der breiten, flächigen Klebstoffspur mit der Stirnfläche derart dichtend verklebt ist, dass die Rohseite von der Reinseite getrennt ist.

15. Filterelement nach einem der Ansprüche 9 - 14, umfassend ein zickzackförmig gefaltetes Filtermedium, welches eine Rohseite von einer Reinseite trennt und abwechselnd Faltenspitzen und Faltengründe aufweist, wobei in den Faltenzwischenräumen Stabilisierungsspuren aus dem Schmelzklebstoffsystem angeordnet sind, welche sich alternierend zwischen Faltenspitzen und Faltengründen erstrecken, wobei sowohl auf der Rohseite als auch auf der Reinseite des Filtermediums jeweils mindestens zwei Klebstoffspuren zueinander parallel und insbesondere senkrecht zu der Richtung der Faltkanten auf dem Filterelement angeordnet sind, wobei die Klebstoffspuren auf der Rohseite und/oder der Reinseite in regelmäßigen Abständen unterbrochen sind, wobei die Anfangs- und Endpunkte der Unterbrechungen der Klebstoffspuren an einer Mehrzahl von Geraden ausgerichtet ist.

16. Filterelement nach einem der vorhergehenden Ansprüche, wobei der Gesamtanteil der Adipinsäure an den Grundstoffen des ersten Schmelzklebstoffes, der Polyester basiert ist, und des zweiten Schmelzklebstoffes, der Polyamid basiert ist, >5 Gewichts-%, bevorzugt >10 Gewichts-%, besonders bevorzugt >15 Gewichts- % und gleichzeitig <35 Gewichts-%, bevorzugt <30 Gewichts-% und besonders bevorzugt <25 Gewichts-% beträgt.

17. Verfahren zur Herstellung eines Filterelementes nach einem der vorhergehenden Ansprüche, das Verfahren umfassend die Schritte:
a. Aufschmelzen eines ersten Schmelzklebstoffes, der insbesondere ausschließlich Polyester basiert ist, und eines zweiten Schmelzklebstoffes, der insbesondere ausschließlich Polyamid basiert ist,
b. insbesondere dynamisches Mischen der beiden Schmelzklebstoffe, insbesondere unter Erzeugung von Scherkräften in der Schmelze,
c. Applikation der geschmolzenen Schmelzklebstoffmischung auf ein bahnförmiges Filtermedium in mindestens einer dichtenden, ununterbrochenen Klebstoffspur aus dem Schmelzklebstoffsystem auf mindestens einer Fläche des flachen, bahnförmigen Filtermediums, insbesondere mittels einer Auftragsdüse, so dass Filterkörper derart verklebt wird, dass Roh- und Reinseite des Filterelements dichtend voneinander getrennt sind,
d. Aushärten der mindestens einen Klebstoffspur unter Verbindung von Abschnitten einer Filtermediumbahn des Filtermediums mit anderen Abschnitten der selben Filtermediumbahn oder mit Abschnitten einer zweiten, insbesondere gewellten Filtermediumbahn und/oder mit einem Vorabscheidervlies.

18. Verfahren nach dem vorhergehenden Anspruch, **dadurch gekennzeichnet, dass** die beiden Schmelzklebstoffe, insbesondere in Pulver- oder Granulatform vorliegend, vor dem Erhitzen durchmengt und anschließend erhitzt und aufgeschmolzen werden.

19. Verwendung eines Schmelzklebstoffs aus einem Schmelzklebstoffsystem zum Verkleben von Filterelementen nach Anspruch 1 mittels Schmelzklebstoffspuren, wobei das Schmelzklebstoffsystem eine Schmelzklebstoffmischung umfasst, die Schmelzklebstoffmischung umfassend 15-85 Gewichts-%, insbesondere 30-70 Gewichts-%, eines ersten Schmelzklebstoffes, der Polyester basiert ist, und 15-85 Gewichts-%, insbesondere 30-70 Gewichts-%, eines zweiten Schmelzklebstoffes, der Polyamid basiert ist, wobei die Gewichtsanteile des ersten und des zweiten Schmelzklebstoffes zusammen 100 Gewichts-% der Schmelzklebstoffmischung ergeben, wobei die Schmelzklebstoffmischung einen Anteil von mehr als 75 Gewichts-%, insbesondere mehr als 85 Gewichts-%, besonders bevorzugs mehr als 95 Gewichts-% an dem Schmelzklebstoffsystem hat, wobei der Rest aus Füllstoffen wie Kreide und/oder Pigmenten wie Titandioxid als Weißpigment und/oder einem klebrig machenden Harz und/oder mindestens einem weiteren Schmelzklebstoff auf Polykondensat-Basis gebildet ist.

## Claims

1. Filter element, comprising a filter body of at least one layer of a flat, web-shaped filter medium which separates a raw side from a clean side, e.g. a zigzag-folded filter bellows, wherein the filter body is glued by means of a hotmelt adhesive system, wherein the hot-melt adhesive system comprises a hotmelt adhesive mixture, the hot-melt adhesive mixture comprising 15-85 % by weight, in particular 30-70 % by weight, of a first hot-melt adhesive which is polyester-based, and 15-85 % by weight, in particular 30-70 % by weight, of a second hot-melt adhesive which is polyamide-based, wherein the parts by weight of the first and the second hot-melt adhesive in combination result in 100 % by weight of the hot-melt adhesive mixture, wherein the hot-melt adhesive mixture has a proportion of more than 75 % by weight of the hot-melt adhesive system, wherein the remaining part is made of filling material such as chalk and/or pigments such as titanium dioxide as white pigment and/or a tackifying resin and/or at least one further hot-melt adhesive on polycondensate base, wherein the filter body features on at least one surface of the flat, web-shaped filter medium a sealing, uninterrupted adhesive line from the hot-melt adhesive system which glues the filter body in such a way that raw and clean side of the filter element are sealingly separated from each other.

2. Filter element according to claim 1, **characterized in that** the filter body has an annular design and is made of a zigzag-folded filter bellows of a flat filter medium sheet which is annularly fluid-tightly closed in such a way that two opposing end portions of the filter medium sheet, in particular parallel to the fold edges, are sealingly connected by an adhesive line from the hot-melt adhesive system, the adhesive line extending along the end edges at the end portions.

3. Filter element according to claim 2, **characterized in that** the end portions are pressed against the adhesive line, in particular with a wave-shaped profile.

4. Filter element according to claims 2-3, **characterized in that** the adhesive line extends along the total length of the end edges.

5. Filter element according to claims 2-4, **characterized in that** end disks, which close the front sides sealingly in such a way that the raw side is separated from the clean side, are disposed on the axial front sides of the annular filter body, wherein the adhesive line is sealingly connected with the end disks.

6. Filter element according to claim 1, **characterized in that** the filter body is made of a semi-finished product of two superimposed layers of a filter medium, wherein one layer is designed as flat layer and the second layer as wavy layer, wherein the semi-finished product is wound or placed one above the other in layers so that channels allowing passage therethrough are realized between the layers, wherein the two layers are connected with each other by means of at least one uninterrupted adhesive line from the hot-melt adhesive system, wherein the adhesive line extends on a flat side of the smooth layer along a first edge of the smooth layer and along an edge of the wavy layer between the smooth layer and the wavy layer perpendicular to the waves in such a way that the channels allowing passage therethrough are sealingly closed at a first end.

7. Filter element according to claim 6, **characterized in that** a second uninterrupted adhesive line from the hot-melt adhesive system is provided by means of which the two layers are connected with each other, wherein the second adhesive line extends on the second side opposing the first flat side of the smooth layer along a second edge opposing the first edge of the smooth layer between the smooth layer and the wavy layer perpendicular to the waves in such a way that the channels allowing passage therethrough are sealingly closed at a second end in such a way that a filter body with alternately closing channels is realized.

8. Filter element according to claim 1, 6 or 7, **characterized in that** the filter body is made of a semi-finished product of two superimposed wound layers of a filter medium, wherein one layer is designed as flat layer and the second layer as wavy layer so that channels allowing passage therethrough are realized between the two layers, wherein the two layers are connected with each other by means of at least one adhesive line from the hot-melt adhesive system, wherein the adhesive line extends on a side of the smooth layer facing the wave peaks transversely, in particular perpendicularly to the waves in such a way that the wave peaks abutting on the smooth layer are glued with the smooth layer, wherein the height of the adhesive line is lower than the height of the waves so that the channels allowing passage therethrough are not closed by this adhesive line.

9. Filter element according to claim 1, **characterized in that** the filter body is made of a zigzag-folded filter bellows of a flat filter medium sheet, wherein an uninterrupted adhesive line each from the hot-melt adhesive system extending perpendicularly to the fold edges along the front edges of the filter medium sheet is provided which closes the erected folds laterally by forming a folding pocket in such a way that the raw and clean side of the filter element are sealingly separated from each other.

10. Filter element according to the previous claim, **characterized in that** the fold edges form a plane on at least one side of the filter bellows.

11. Filter element according to the previous claim, **characterized in that** a plane formed by the fold edges is enclosed by a sealing which surrounds the plane, made in particular of a foamed polymer, in particular polyurethane, for sealingly separating the raw side from the clean side in a filter housing.

12. Filter element according to claim 1, in particular according to claim 10 or 11, **characterized in that** the filter body is made of a zigzag-folded filter bellows of a flat filter medium sheet, wherein the filter bellows features an adhesive line which is applied, in a plane of the filter bellows formed by the fold edges, without interruption across several fold edges in particular perpendicular to the fold edges, in particular to stabilize the filter bellows and to keep the distance between the adjacent fold edges constant during operation.

13. Filter element according to one of the claims 1 or 10-12, **characterized in that** the filter body is made of a zigzag-folded filter bellows of a flat filter medium sheet, with fold edges on the inflow side and fold edges on the outflow side, and comprises a pre-separator layer, in particular of a fleece, which rests on the surface formed by the fold edges on the inflow side, wherein the filter body is glued with the pre-separator layer by means of the hot-melt adhesive system, in particular by means of adhesive dots or adhesive lines, in particular by means of at least two adhesive lines according to claim 12.

14. Filter element according to claim 1 or 10-13, **characterized in that** the filter body is made of a zigzag-folded filter bellows of a flat filter medium sheet, wherein the zigzag-folded extending front edges of the filter medium sheet form two front faces, wherein a lateral strip made of a fabric or fleece is applied to at least one of the front faces, this lateral strip being glued by means of a large flat adhesive line of a hot-melt adhesive system in particular in such a way that the lateral strip is sealingly glued by means of the large flat adhesive line with the front face in such a way that the raw side is separated from the clean side.

15. Filter element according to one of the claims 9-14, comprising a zigzag-folded filter medium which separates a raw side from a clean side and features alternatingly fold tips and fold bases, wherein stabilizing tracks from the hotmelt adhesive system, which extend alternatingly between fold tips and fold bases, are disposed in the intermediate fold spaces, wherein on the raw side as well as on the clean side of the filter medium at least two lines of adhesive each are disposed parallel to each other and in particular perpendicularly to the direction of the fold edges on the filter element, wherein the lines of adhesive on the raw side and/or on the clean side are interrupted at regular spacings, wherein the start and end points of the interruptions of the lines of adhesive are aligned relative to a plurality of straight lines.

16. Filter element according to one of the above claims, wherein the total percentage of the adipic acid in the basic materials of the the first hot-melt adhesive which is polyester-based, and the second hot-melt adhesive which is polyamide-based, amounts to >5 % by weight, preferably >10 % by weight, particularly preferred >15 % by weight and at the same time <35 % by weight, preferably <30 % by weight and particularly preferred <25 % by weight.

17. Method for manufacturing a filter element according to one of the above claims, the method comprising the steps:
a. melting of a first hot-melt adhesive which is in particular exclusively polyester-based, and a second hot-melt adhesive which is in particular exclusively polyamide-based,
b. in particular dynamic mixing of both hot-melt adhesives, in particular by generating shear forces in the melt,
c. application of the melted hot-melt adhesive mixture to a web-shaped filter medium in at least one sealing, uninterrupted adhesive line from the hot-melt adhesive system on at least one surface of the flat web-shaped filter medium, in particular by means of an application nozzle so that the filter body is glued in such a way that raw and clean side of the filter element are sealingly separated from each other,
d. hardening of the at least one adhesive line by connecting sections of a filter medium web of the filter medium with other sections of the same filter medium web or with sections of a second, in particular wavy filter medium web and/or with a pre-separator fleece.

18. Method according to the above claim, **characterized in that** the two hot-melt adhesives, existing in particular in powder or granule form, are mixed before heating and then heated and melted.

19. Utilization of a hot-melt adhesive of a hot-melt adhesive system for gluing filter elements according to claim 1 by means of hot-melt adhesive lines, wherein the hot-melt adhesive system comprises a hot-melt adhesive mixture, the hotmelt adhesive mixture comprising 15-85 % by weight, in particular 30-70 % by weight, of a first hot-melt adhesive which is polyester-based, and 15-85 % by weight, in particular 30-70 % by weight, of a second hot-melt adhesive which is polyamide-based, wherein the parts by weight of the first and the second hotmelt adhesive in combination result in 100 % by weight of the hot-melt adhesive mixture, wherein the hot-melt adhesive mixture has a proportion of more than 75 % by weight, in particular more than 85 % by weight, particularly preferred more than 95 % by weight of the hot-melt adhesive system, wherein the remaining part is made of filling material such as chalk and/or pigments such as titanium dioxide as white pigment and/or a tackifying resin and/or at least one further hot-melt adhesive on polycondensate base.

## Revendications

1. Élément filtrant comprenant un corps de filtre constitué d'au moins une couche d'un milieu filtrant plat en forme de bande qui sépare un côté brut d'un côté pur, p. ex. un soufflet de filtre plié en accordéon, le corps de filtre étant collé au moyen d'un système de colles thermofusibles, le système de colles thermofusibles comprenant un mélange de colles thermofusibles, le mélange de colles thermofusibles comprenant 15 à 85 % en poids, en particulier 30 à 70 % en poids, d'une première colle thermofusible à base de polyester, et 15 à 85 % en poids, en particulier 30 à 70 % en poids, d'une deuxième colle thermofusible à base de polyamide, le pourcentage en poids de la première et de la deuxième colles thermofusibles représentant un total de 100 % en poids du mélange de colles thermofusibles, le mélange de colles thermofusibles représentant une part de plus de 75 % en poids du système de colles thermofusibles, le reste étant constitué de matières de charge telles que de la craie et/ou des pigments tels que du dioxyde de titane en tant que pigment blanc et/ou d'une résine rendant adhésive et/ou d'au moins une autre colle thermofusible à base de polycondensat, le corps de filtre présentant sur au moins une surface du milieu filtrant plat en forme de bande un cordon de colle d'étanchéité ininterrompu issu du système de colles thermofusibles qui colle le corps de filtre de telle manière que le côté brut et le côté pur de l'élément filtrant soient séparés l'un de l'autre de façon étanche.

2. Élément filtrant selon la revendication 1, **caractérisé en ce que** le corps de filtre est d'une forme annulaire et constitué d'un soufflet de filtre plié en accordéon à partir d'une feuille de milieu filtrant plate qui est fermée de façon annulaire et étanche aux fluides de telle manière que deux sections d'extrémité situées face à face de la feuille de milieu filtrant soient reliées de manière étanche, en particulier parallèlement aux bords de pliage, par le biais d'un cordon de colle issu du système de colles thermofusibles et disposé le long des bords d'extrémité sur les sections d'extrémité.

3. Élément filtrant selon la revendication 2, **caractérisé en ce que** les sections d'extrémité sont pressées sur le cordon de colle, en particulier avec un profil ondulé.

4. Élément filtrant selon les revendications 2 à 3, **caractérisé en ce que** le cordon de colle est disposé tout au long des bords d'extrémité.

5. Élément filtrant selon les revendications 2 à 4, **caractérisé en ce que** des disques d'extrémité sont disposés sur les faces frontales axiales du corps de filtre de forme annulaire et obturent les faces frontales de manière étanche de sorte que le côté brut soit séparé du côté pur, le cordon de colle étant relié de manière étanche aux disques d'extrémité.

6. Élément filtrant selon la revendication 1, **caractérisé en ce que** le corps de filtre est constitué d'un demi-produit fait de deux couches superposées d'un milieu filtrant, l'une de ces couches étant exécutée en tant que couche plate et la deuxième couche étant exécutée en tant que couche ondulée, le demi-produit étant enroulé ou empilé par couches superposées, de sorte que des canaux de passage soient formés entre les couches, les deux couches étant reliées entre elles respectivement par le biais d'au moins un cordon de colle ininterrompu issu du système de colles thermofusibles, le cordon de colle étant disposé entre la couche lisse et la couche ondulée, verticalement aux ondulations, sur un côté plan de la couche lisse le long d'un premier bord de la couche lisse et le long d'un bord de la couche ondulée, de telle manière que les canaux de passage soient obturés de manière étanche à une première extrémité.

7. Élément filtrant selon la revendication 6, **caractérisé en ce qu'**un deuxième cordon de colle ininterrompu issu du système de colles thermofusibles est prévu, par le biais duquel les deux couches sont reliées entre elles, le deuxième cordon de colle étant disposé entre la couche lisse et la couche ondulée, verticalement aux ondulations, sur le deuxième côté situé en face du premier côté plan de la couche lisse, le long d'un deuxième bord situé en face du premier bord de la couche lisse, de telle manière que les canaux de passage soient obturés de manière étanche à une deuxième extrémité, de manière à ce qu'un corps de filtre présentant des canaux obturés en alternance soit formé.

8. Élément filtrant selon la revendication 1, 6 ou 7, **caractérisé en ce que** le corps de filtre est constitué d'un demi-produit fait de deux couches enroulées superposées d'un milieu filtrant, l'une de ces couches étant exécutée en tant que couche plate et la deuxième couche étant exécutée en tant que couche ondulée, de sorte que des canaux de passage soient formés entre les deux couches, les deux couches étant reliées entre elles par le biais d'au moins un cordon de colle issu du système de colles thermofusibles, le cordon de colle étant disposé en travers, sur un côté orienté vers les sommets des ondulations de la couche lisse, en particulier verticalement aux ondulations, de telle manière que les sommets des ondulations appliqués contre la couche lisse soient collés sur la couche lisse, la hauteur du cordon de colle étant inférieure à la hauteur des ondulations, de sorte que les canaux de passage ne soient pas obturés par ce cordon de colle.

9. Élément filtrant selon la revendication 1, **caractérisé en ce que** le corps de filtre est constitué d'un soufflet de filtre plié en accordéon à partir d'une feuille de milieu filtrant plate, respectivement un cordon de colle ininterrompu issu du système de colles thermofusibles étant prévu le long des bords frontaux de la feuille de milieu filtrant évoluant verticalement aux bords de pliage, ce cordon de colle ininterrompu obturant latéralement les plis dressés en formant une poche de pli de manière à ce que le côté brut et le côté pur de l'élément filtrant soient séparés l'un de l'autre de manière étanche.

10. Élément filtrant selon la revendication précédente, **caractérisé en ce que** les bords de pliage forment un plan sur au moins un côté du soufflet de filtre.

11. Élément filtrant selon la revendication précédente, **caractérisé en ce qu'**un plan formé par les bords de pliage est entouré d'un joint qui encercle le plan et qui est constitué en particulier d'une mousse polymère, en particulier de polyuréthane, pour séparer de manière étanche le côté brut du côté pur dans un boîtier de filtre.

12. Élément filtrant selon la revendication 1, en particulier selon la revendication 10 ou 11, **caractérisé en ce que** le corps de filtre est constitué d'un soufflet de filtre plié en accordéon à partir d'une feuille de milieu filtrant plate, le soufflet de filtre présentant un cordon de colle qui est appliqué, dans un plan du soufflet de filtre formé par les bords de pliage, de façon ininterrompue sur plusieurs de ces bords de pliage, en particulier verticalement aux bords de pliage, en particulier pour stabiliser le soufflet de filtre et maintenir à un niveau constant, durant le fonctionnement, la distance entre les bords de pliage voisins.

13. Élément filtrant selon l'une des revendications 1 ou 10 à 12, **caractérisé en ce que** le corps de filtre est constitué d'un soufflet de filtre plié en accordéon à partir d'une feuille de milieu filtrant plate, avec des bords de pliage du côté entrée et des bords de pliage du côté sortie, et qui comprend une couche de pré-séparateur, constituée en particulier d'un non-tissé, qui repose sur la surface formée par les bords de pliage du côté entrée, le corps de filtre étant collé sur la couche de pré-séparateur au moyen du système de colles thermofusibles, en particulier au moyen de points de colle ou de cordons de colle, en particulier au moyen d'au moins deux cordons de colle, conformément à la revendication 12.

14. Élément filtrant selon la revendication 1 ou 10 à 13, **caractérisé en ce que** le corps de filtre est constitué d'un soufflet de filtre plié en accordéon à partir d'une feuille de milieu filtrant plate, les bords frontaux en accordéon de la feuille de milieu filtrant formant deux faces frontales, une bande latérale faite d'un tissu ou d'un non-tissé étant appliquée sur au moins une des faces frontales, cette bande latérale étant collée en particulier au moyen d'un cordon de colle plan et large issu du système de colles thermofusibles de telle manière que la bande latérale soit collée de manière étanche sur la face frontale au moyen du cordon plan et large, de sorte que le côté brut soit séparé du côté pur.

15. Élément filtrant selon l'une des revendications 9 à 14, comprenant un milieu filtrant plié en accordéon qui sépare un côté brut d'un côté pur et qui présente en alternance des crêtes de pli et des creux de pli, des cordons de stabilisation issus du système de colles thermofusibles, qui s'étendent en alternance entre les crêtes de pli et les creux de pli, étant situés dans les interstices de pliage, respectivement au moins deux cordons de colle étant disposés sur l'élément filtrant, aussi bien sur le côté brut que sur le côté pur du milieu filtrant, et ce parallèlement l'un par rapport à l'autre et en particulier verticalement au sens des bords de pliage, les cordons de colle étant interrompus à des distances régulières sur le côté brut et/ou sur le côté pur, les points de départ et les points finaux des interruptions des cordons de colle étant alignés sur une multitude de lignes droites.

16. Élément filtrant selon l'une des revendications précédentes, le pourcentage global d'acide adipique dans les substances de base de la première colle thermofusible à base de polyester et de la deuxième colle thermofusible à base de polyamide correspondant à > 5 % en poids, de préférence à > 10 % en poids, et plus spécialement à > 15 % en poids, et en même temps à < 35 % en poids, de préférence à < 30 % en poids, et plus spécialement à < 25 % en poids.

17. Procédé de fabrication d'un élément filtrant selon l'une des revendications précédentes, ce procédé comprenant les étapes suivantes :
a. fusion d'une première colle thermofusible en particulier exclusivement à base de polyester et d'une deuxième colle thermofusible en particulier exclusivement à base de polyamide,
b. en particulier mélange dynamique des deux colles thermofusibles, en particulier en générant des forces de cisaillement dans la matière fondue,
c. application du mélange fondu de colles thermofusibles sur un milieu filtrant en forme de bande sous forme d'au moins un cordon de colle ininterrompu avec un effet d'étanchéité et issu du système de colles thermofusibles, sur au moins une surface du milieu filtrant plat en forme de bande, en particulier au moyen d'une buse d'application, de sorte que le corps de filtre soit collé de manière à ce que le côté brut et le côté pur de l'élément filtrant soient séparés l'un de l'autre de manière étanche,
d. durcissement du cordon de colle, au nombre d'au moins un, en reliant des sections d'une bande de milieu filtrant du milieu filtrant à d'autres sections de la même bande de milieu filtrant ou à des sections d'une deuxième bande de milieu filtrant, ondulée en particulier, et/ou à un non-tissé du pré-séparateur.

18. Procédé selon la revendication précédente, **caractérisé en ce que** les deux colles thermofusibles, se présentant en particulier sous forme de poudre ou de granulats, sont mélangées avant d'être chauffées, puis sont chauffées et fondues.

19. Utilisation d'une colle thermofusible issue d'un système de colles thermofusibles pour le collage d'éléments filtrants selon la revendication 1 au moyen de cordons de colles thermofusibles, le système de colles thermofusibles comprenant un mélange de colles thermofusibles, le mélange de colles thermofusibles comprenant 15 à 85 % en poids, en particulier 30 à 70 % en poids, d'une première colle thermofusible à base de polyester, et 15 à 85 % en poids, en particulier 30 à 70 % en poids, d'une deuxième colle thermofusible à base de polyamide, le pourcentage en poids de la première et de la deuxième colles thermofusibles représentant un total de 100 % en poids du mélange de colles thermofusibles, le mélange de colles thermofusibles représentant une part de plus de 75 % en poids, en particulier de plus de 85 % en poids, et plus spécialement de plus de 95 % en poids du système de colles thermofusibles, le reste étant constitué de matières de charge telles que de la craie et/ou des pigments tels que du dioxyde de titane en tant que pigment blanc et/ou d'une résine rendant adhésive et/ou d'au moins une autre colle thermofusible à base de polycondensat.
